# EUROPEAN PATENT SPECIFICATION

(11) **EP 3 884 640 B1**
(45) Date of publication and mention of the grant of the patent: **08.10.2025**
(21) Application number: 19836054.7
(22) Date of filing: 07.11.2019
(51) Int. Cl.: H04L 9/40, H04W 12/08, H04W 12/12, H04W 12/60, H04L 43/028, H04L 67/146, H04W 12/06, H04L 101/622

(54) **METHOD AND APPARATUS TO HAVE ENTITLEMENT FOR FOLLOWING THE END DEVICE IN NETWORK**
VERFAHREN UND VORRICHTUNG DAFÜR, EINE BERECHTIGUNG DER ENDVORRICHTUNG IN EINEM NETZWERK FOLGEN ZU LASSEN
PROCÉDÉ ET APPAREIL POUR AVOIR LE DROIT DE SUIVRE LE DISPOSITIF TERMINAL DANS UN RÉSEAU

(30) Priority: 21.11.2018 US 201862770321 P; 24.04.2019 US 201916393680
(43) Date of publication of application: 29.09.2021
(73) Proprietor: Cisco Technology, Inc., San Jose, California 95134-1706 (US)
(72) Inventor: WONG, Pok Sze, Santa Clara, California 95054 (US); RAGOTHAMAN, Venkataramana, Milpitas, California 95035 (US)
(74) Representative: Warren, Caroline Elisabeth
(86) International application number: PCT/US2019/060325
(87) International publication number: WO 2020/106464

(56) References cited:
- EP-A1- 2 887 609
- US-A1- 2003 182 431
- US-A1- 2016 057 170
- US-A1- 2017 041 343

## Description

### TECHNICAL FIELD

The subject matter of this disclosure relates in general to the field of computer networking, and more particularly, to systems and methods for improving the operation of an enterprise network.

### BACKGROUND

A campus network can provide connectivity to computing devices (e.g., servers, workstations, desktop computers, laptop computers, tablets, mobile phones, etc.) and things (e.g., desk phones, security cameras, lighting, heating, ventilating, and air-conditioning (HVAC), windows, doors, locks, medical devices, industrial and manufacturing equipment, etc.) within environments such as offices, hospitals, colleges and universities, oil and gas facilities, factories, and similar locations. Some of the unique challenges a campus network may face include integrating wired and wireless devices, on-boarding computing devices and things that can appear anywhere in the network and maintaining connectivity when the devices and things migrate from location to location within the network, supporting bring your own device (BYOD) capabilities, connecting and powering Internet-of- Things (IoT) devices, and securing the network despite the vulnerabilities associated with Wi-Fi access, device mobility, BYOD, and IoT. Current approaches for deploying a network capable of providing these functions often require constant and extensive configuration and administration by highly skilled network engineers operating several different systems (e.g., directory-based identity services; authentication, authorization, and accounting (AAA) services, wireless local area network (WLAN) controllers; command line interfaces for each switch, router, or other network device of the network; etc.) and manually stitching these systems together. This can make network deployment difficult and time-consuming, and impede the ability of many organizations to innovate rapidly and to adopt new technologies, such as video, collaboration, and connected workspaces.

EP 2 887 609 discloses a system for analyzing devices on a network. The system includes: a packet processor configured to receive at least one packet from a CPE; a subscriber/session identity module configured to determine identity metadata with the at least one packet; and a device tracker module configured to analyze the at least one packet to determine a device associated with the at least one packet. US 2016/057170 discloses an access control module in an enterprise computing network that receives contextual information of a first active network session at a first network endpoint and contextual information of a second active network session at a second network endpoint. The access control module is configured to evaluate the contextual information of one or more of the first or second network sessions based on one or more network policies to determine a policy action for enforcement on at least one of the first or second network endpoints. US 2003/182431 discloses an apparatus for enabling secure connectivity using standards-based Virtual Private Network (VPN) IPSEC algorithms in a mobile and intermittently connected computing environment enhance the current standards based algorithms by allowing migratory devices to automatically (re)establish security sessions as the mobile end system roams across homogeneous or heterogeneous networks while maintaining network application session. US 2017/041343 discloses a method that includes receiving at an enforcement node, a request to access a network from an endpoint, transmitting at the enforcement node, the access request to a policy server, receiving at the enforcement node from the policy server, a dynamic authorization comprising a plurality of ranks, each of the ranks comprising a policy for access to the network by the endpoint, assigning the endpoint to one of the ranks and applying the policy associated with the rank to traffic received from the endpoint at the enforcement node during a communication session between the endpoint and the network, assigning the endpoint to a different rank, and applying the policy associated with the rank to traffic received from the endpoint during the communication session.

### BRIEF DESCRIPTION OF THE FIGURES

To provide a more complete understanding of the present disclosure and features and advantages thereof, reference is made to the following description, taken in conjunction with the accompanying drawings, in which:
FIG. 1 illustrates an example of a physical topology of an enterprise network in accordance with an embodiment;
FIG. 2 illustrates an example of a logical architecture for an enterprise network in accordance with an embodiment;
FIGS. 3A-3I illustrate examples of graphical user interfaces for a network management system in accordance with an embodiment;
FIG. 4 illustrates an example of a physical topology for a multi- site enterprise network in accordance with an embodiment;
FIG. 5A illustrates a flowchart representation of enabling entitlement to follow the end device in a network in accordance with an embodiment;
FIG. 5B shows an example schematic diagram of a multiple network environment that follows a device to apply consistent entitlement in accordance with some embodiments; and
FIGS. 6A and 6B illustrate examples of systems in accordance with some embodiments.

### DESCRIPTION OF EXAMPLE EMBODIMENTS

The detailed description set forth below is intended as a description of various configurations of embodiments and is not intended to represent the only configurations in which the subject matter of this disclosure can be practiced. The appended drawings are incorporated herein and constitute a part of the detailed description. The detailed description includes specific details for the purpose of providing a more thorough understanding of the subject matter of this disclosure. However, it will be clear and apparent that the subject matter of this disclosure is not limited to the specific details set forth herein and may be practiced without these details. In some instances, structures and components are shown in block diagram form in order to avoid obscuring the concepts of the subject matter of this disclosure.

### Overview

Aspects of the invention are set out in the independent claims and preferred features are set out in the dependent claims. Features of one aspect may be applied to each aspect alone or in combination with other aspects.

Systems and methods provide for tracking a device at a network independent of where the device connects to the network. Embodiments can identify that a device associated with a security policy has previously connected to the network. In response, a match is determined between the device and an existing session ID and device tracking information, where the existing session ID and device tracking information are independent of where in the network the device has connected. Based on the match, the security policy is applied to the device.

### Example Embodiments

In some cases, a device can be assigned with a network service entitlement (e.g., access control lists (ACL), Quality of Service (QoS), virtual local area network (VLAN)) when it attaches to a network based on its authorization and security posture with respect to that attachment point and network. When the device moves to a different port or network, the entitlement must be re-computed again based on the requirement of that network. A user, such as an employee or student, may attempt to evade a corporate patch and/or upgrade requirement by going to another, less secure network, such as the guest network. An infected device can be an infected endpoint, and that infected endpoint may infect other endpoints with a new virus and/or exfiltrate data if they can drop from one network and reconnect to another (for example, the device can drop from a quarantine network and then reconnect to a guest network). Client based technologies can try to enforce a consistent enforcement across a network, but this usually requires installing client software (e.g. posture / Advanced Malware Protection (AMP) client), or building in client driven enforcement within endpoints (e.g. Manufacturer Usage Description (MUD)). Moreover, client software based enforcement can be circumvented by a user.

For example, a student may want to evade registering their device. The student's laptop may need to register their asset for upgrades, patches, etc. to comply with a policy (e.g., a school's security policy). If the student wants to avoid the upgrade, patch, etc., and/or install forbidden software on their laptop (e.g., software not compliant with the school's security policy), the student can evade being tracked by going on to the school's network through a virtual private network (VPN) or by going onto a different network. Or rather than going onto the student network, the student may go onto the guest network. In essence, the student can network hop in order to prevent their laptop from being asked to comply with a security policy of the original network (e.g., prevent the latest security patch). To address this, the system can track what the client actually is. No matter what network the student is on, rather than tracking a perceived network persona, the network will track what the device actually is to accurately identify if a device is network hopping.

In other words, example embodiments disclosed herein can enable the ability to address client mobility problems when it comes to encrypted traffic analytics. If network devices are considered (whether its access to wireless or non-wireless devices) for collecting network information about certain clients and then exporting it to an analyzer system, often the problem is this: if a client gets connected to one part of the network, and then it moves and gets connected to a different part of the network, the client needs to be followed wherever it goes to ensure that its tracked for its network traffic. Mechanisms cannot do this currently.

The disclosed technology offers a solution to the above problems. Mechanisms and methods of the technology use IP device tracking implemented in network devices (e.g., switches), which can glean the IP MAC address mapping from the Dynamic Host Configuration Protocol (DHCP) and/or Domain Name Server (DNS) information and can maintain a table. A controller (e.g., one or more Cisco Digital Network Architecture Center appliances on an enterprise network) can get the device tracking information from each of the devices (e.g., switches) that it connects to periodically, such as during a network sync. The Cisco DNA Center can maintain and keep track of the device tracking information, such as, but not limited to, existing session ID's, IP device tracking information, and accounting information.

With IP device tracking within the Cisco DNA Center, when a client gets connected to a part of the network, the system can know where it is connected (e.g., to which access switch the client is connected to). So when the client moves, based on the update that the Cisco DNA Center gets on the IP device tracking information, the system can find out the new point of the network where the client is connected. From a traffic provisioning analytics service, the system can automatically provision within the new network device (e.g., new switch) the corresponding monitoring configuration for NetFlow.

Features of the technology disclosed herein therefore can enable a system that does not require installing client software (e.g. posture / AMP client), and does not require an endpoint manufacturer to build in client driven enforcement support (e.g. MUD). Also, client software based enforcement cannot be circumvented by the user. Instead, embodiments detect a user device's movements or disconnects from the network based on IP device tracking, and/or encrypted traffic analytics and a parent device, such as a controller/ network admission control (NAC) component/device. End device client side firewall/posture software can derive entitlement at the client.

This can be done using intent-based networking. Intent-based networking is an approach for overcoming the deficiencies, discussed above and elsewhere in the present disclosure, of conventional enterprise networks. The motivation of intent-based networking is to enable a user to describe in plain language what he or she wants to accomplish (e.g., the user's intent) and have the network translate the user's objective into configuration and policy changes that are automatically propagated across a complex and heterogeneous computing environment. Thus, an intent-based network can abstract network complexity, automate much of the work of provisioning and managing the network typically handled by a network administrator, and assure secure operation and optimal performance of the network. As an intent-based network becomes aware of the users, devices, and things making connections in the network, it can automatically apply security permissions and service levels in accordance with the privileges and quality of experience (QoE) assigned to the users, devices, and things. Table 1 sets forth examples of intents and workflows that can be automated by an intent-based network to achieve a desired outcome.

**Table 1: Examples of Intents and Associated Workflows**

| **Intent** | **Workflow** |
|---|---|
| I need to scale out my application database | Extend network segments; update load balancer configuration; configure quality of service (QoS) |
| I have scheduled a telemedicine session at 10am | Create high-definition (HD) video connection; prioritize with end-to-end QoS; validate performance; keep the communication safe; tear down connection after call |
| I am rolling out a new IoT app for factory equipment monitoring | Create a new segment for all factory devices to connect to the IoT app; isolate from other traffic; apply service level agreement (SLA); validate SLA; optimize traffic flow |
| I need to deploy a secure multi-tier application | Provision multiple networks and subnets; configure access control lists (ACLs) and firewall rules; advertise routing information |
| | |

Some additional examples of use cases of an intent-based network:
- An intent-based network can learn the performance needs of applications and services and adapt the network from end-to-end to achieve specified service levels;
- Instead of sending technicians to every office, floor, building, or branch, an intent-based network can discover and identify devices and things as they connect, assign security and micro-segmentation profiles according to established policies, and continuously monitor access point performance to automatically adjust for QoE;
- Users can move freely among network segments, mobile device in hand, and automatically connect with the correct security and access privileges;
- Switches, routers, and other network devices can be powered up by local non-technical office personnel, and the network devices can be configured remotely (by a user or by the network) via a cloud management console with the appropriate policies as defined by the intents for the specific location (e.g., permanent employee access, visiting employee access, guest access, etc.); and
- Machine learning and artificial intelligence agents running in the network can continuously monitor and analyze network traffic and connections, compare activity against pre-defined intents such as application performance or security policies, detect malware intrusions in encrypted traffic and automatically isolate infected devices, and provide a historical record of network events for analysis and troubleshooting.

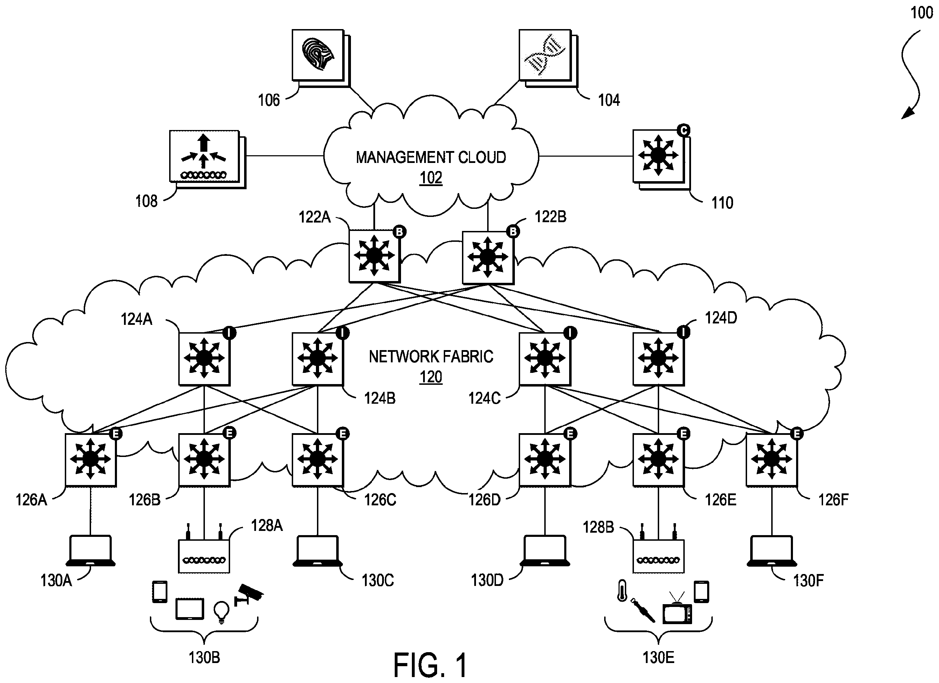

FIG. 1 illustrates an example of a physical topology of an enterprise network 100 for providing intent-based networking. It should be understood that, for the enterprise network 100 and any network discussed herein, there can be additional or fewer nodes, devices, links, networks, or components in similar or alternative configurations. Example embodiments with different numbers and/or types of endpoints, nodes, cloud components, servers, software components, devices, virtual or physical resources, configurations, topologies, services, appliances, or deployments are also contemplated herein. Further, the enterprise network 100 can include any number or type of resources, which can be accessed and utilized by endpoints or network devices. The illustrations and examples provided herein are for clarity and simplicity.

In this example, the enterprise network 100 includes a management cloud 102 and a network fabric 120. Although shown as an external network or cloud to the network fabric 120 in this example, the management cloud 102 may alternatively or additionally reside on the premises of an organization or in a colocation center (in addition to being hosted by a cloud provider or similar environment). The management cloud 102 can provide a central management plane for building and operating the network fabric 120. The management cloud 102 can be responsible for forwarding configuration and policy distribution, as well as device management and analytics. The management cloud 102 can comprise one or more network controller appliances 104, one or more authentication, authorization, and accounting (AAA) appliances 106, one or more wireless local area network controllers (WLCs) 108, and one or more fabric control plane nodes 110. In other embodiments, one or more elements of the management cloud 102 may be co-located with the network fabric 120.

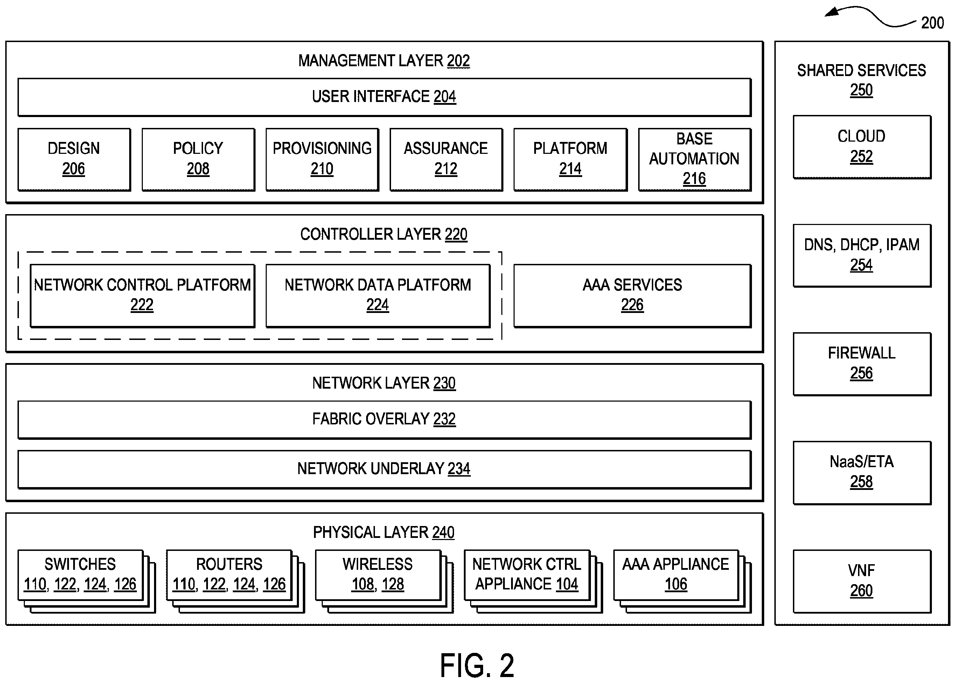

The network controller appliance(s) 104 can function as the command and control system for one or more network fabrics, and can house automated workflows for deploying and managing the network fabric(s). The network controller appliance(s) 104 can include automation, design, policy, provisioning, and assurance capabilities, among others, as discussed further below with respect to FIG. 2. In some embodiments, one or more Cisco Digital Network Architecture (Cisco DNA^{™}) appliances can operate as the network controller appliance(s) 104.

The AAA appliance(s) 106 can control access to computing resources, facilitate enforcement of network policies, audit usage, and provide information necessary to bill for services. The AAA appliance can interact with the network controller appliance(s) 104 and with databases and directories containing information for users, devices, things, policies, billing, and similar information to provide authentication, authorization, and accounting services. In some embodiments, the AAA appliance(s) 106 can utilize Remote Authentication Dial-In User Service (RADIUS) or Diameter to communicate with devices and applications. In some embodiments, one or more Cisco^{®} Identity Services Engine (ISE) appliances can operate as the AAA appliance(s) 106.

The WLC(s) 108 can support fabric-enabled access points attached to the network fabric 120, handling traditional tasks associated with a WLC as well as interactions with the fabric control plane for wireless endpoint registration and roaming. In some embodiments, the network fabric 120 can implement a wireless deployment that moves data-plane termination (e.g., VXLAN) from a centralized location (e.g., with previous overlay Control and Provisioning of Wireless Access Points (CAPWAP) deployments) to an access point/fabric edge node. This can enable distributed forwarding and distributed policy application for wireless traffic while retaining the benefits of centralized provisioning and administration. In some embodiments, one or more Cisco^{®} Wireless Controllers, Cisco^{®} Wireless LAN, and/or other Cisco DNA^{™}-ready wireless controllers can operate as the WLC(s) 108.

The network fabric 120 can comprise fabric border nodes 122A and 122B (collectively, 122), fabric intermediate nodes 124A-D (collectively, 124), and fabric edge nodes 126A-F (collectively, 126). Although the fabric control plane node(s) 110 are shown to be external to the network fabric 120 in this example, in other embodiments, the fabric control plane node(s) 110 may be co-located with the network fabric 120. In embodiments where the fabric control plane node(s) 110 are co-located with the network fabric 120, the fabric control plane node(s) 110 may comprise a dedicated node or set of nodes or the functionality of the fabric control node(s) 110 may be implemented by the fabric border nodes 122.

The fabric control plane node(s) 110 can serve as a central database for tracking all users, devices, and things as they attach to the network fabric 120, and as they roam around. The fabric control plane node(s) 110 can allow network infrastructure (e.g., switches, routers, WLCs, etc.) to query the database to determine the locations of users, devices, and things attached to the fabric instead of using a flood and learn mechanism. In this manner, the fabric control plane node(s) 110 can operate as a single source of truth about where every endpoint attached to the network fabric 120 is located at any point in time. In addition to tracking specific endpoints (e.g., /32 address for IPv4, /128 address for IPv6, etc.), the fabric control plane node(s) 110 can also track larger summarized routers (e.g., IP/mask). This flexibility can help in summarization across fabric sites and improve overall scalability.

The fabric border nodes 122 can connect the network fabric 120 to traditional Layer 3 networks (e.g., non-fabric networks) or to different fabric sites. The fabric border nodes 122 can also translate context (e.g., user, device, or thing mapping and identity) from one fabric site to another fabric site or to a traditional network. When the encapsulation is the same across different fabric sites, the translation of fabric context is generally mapped 1:1. The fabric border nodes 122 can also exchange reachability and policy information with fabric control plane nodes of different fabric sites. The fabric border nodes 122 also provide border functions for internal networks and external networks. Internal borders can advertise a defined set of known subnets, such as those leading to a group of branch sites or to a data center. External borders, on the other hand, can advertise unknown destinations (e.g., to the Internet similar in operation to the function of a default route).

The fabric intermediate nodes 124 can operate as pure Layer 3 forwarders that connect the fabric border nodes 122 to the fabric edge nodes 126 and provide the Layer 3 underlay for fabric overlay traffic.

The fabric edge nodes 126 can connect endpoints to the network fabric 120 and can encapsulate/decapsulate and forward traffic from these endpoints to and from the network fabric. The fabric edge nodes 126 may operate at the perimeter of the network fabric 120 and can be the first points for attachment of users, devices, and things and the implementation of policy. In some embodiments, the network fabric 120 can also include fabric extended nodes (not shown) for attaching downstream non-fabric Layer 2 network devices to the network fabric 120 and thereby extend the network fabric. For example, extended nodes can be small switches (e.g., compact switch, industrial Ethernet switch, building automation switch, etc.) which connect to the fabric edge nodes via Layer 2. Devices or things connected to the fabric extended nodes can use the fabric edge nodes 126 for communication to outside subnets.

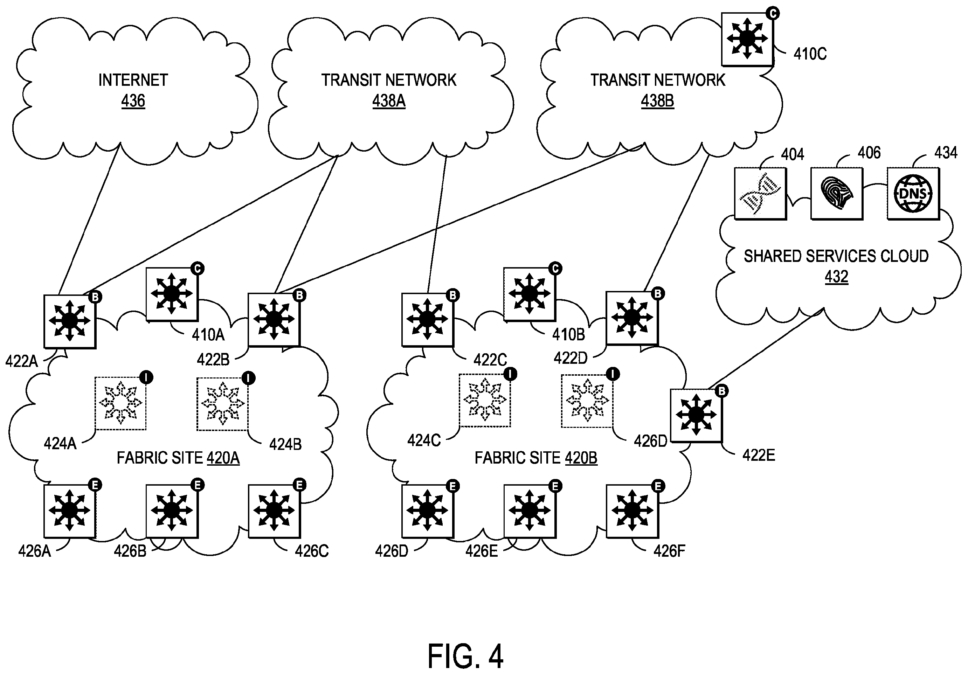

In this example, the network fabric can represent a single fabric site deployment which can be differentiated from a multi-site fabric deployment as discussed further below with respect to FIG. 4.

In some embodiments, all subnets hosted in a fabric site can be provisioned across every fabric edge node 126 in that fabric site. For example, if the subnet 10.10.10.0/24 is provisioned in a given fabric site, this subnet may be defined across all of the fabric edge nodes 126 in that fabric site, and endpoints located in that subnet can be placed on any fabric edge node 126 in that fabric. This can simplify IP address management and allow deployment of fewer but larger subnets. In some embodiments, one or more Cisco^{®} Catalyst switches, Cisco Nexus^{®} switches, Cisco Meraki^{®} MS switches, Cisco^{®} Integrated Services Routers (ISRs), Cisco^{®} Aggregation Services Routers (ASRs), Cisco^{®} Enterprise Network Compute Systems (ENCS), Cisco^{®} Cloud Service Virtual Routers (CSRvs), Cisco Integrated Services Virtual Routers (ISRvs), Cisco Meraki^{®} MX appliances, and/or other Cisco DNA-ready^{™} devices can operate as the fabric nodes 122, 124, and 126.

The enterprise network 100 can also include wired endpoints 130A, 130C, 130D, and 130F and wireless endpoints 130B and 130E (collectively, 130). The wired endpoints 130A, 130C, 130D, and 130F can connect by wire to fabric edge nodes 126A, 126C, 126D, and 126F, respectively, and the wireless endpoints 130B and 130E can connect wirelessly to wireless access points 128B and 128E (collectively, 128), respectively, which in turn can connect by wire to fabric edge nodes 126B and 126E, respectively. In some embodiments, Cisco Aironet^{®} access points, Cisco Meraki^{®} MR access points, and/or other Cisco DNA^{™}-ready access points can operate as the wireless access points 128.

The endpoints 130 can include general purpose computing devices (e.g., servers, workstations, desktop computers, etc.), mobile computing devices (e.g., laptops, tablets, mobile phones, etc.), wearable devices (e.g., watches, glasses or other head-mounted displays (HMDs), ear devices, etc.), and so forth. The endpoints 130 can also include Internet of Things (IoT) devices or equipment, such as agricultural equipment (e.g., livestock tracking and management systems, watering devices, unmanned aerial vehicles (UAVs), etc.); connected cars and other vehicles; smart home sensors and devices (e.g., alarm systems, security cameras, lighting, appliances, media players, HVAC equipment, utility meters, windows, automatic doors, door bells, locks, etc.); office equipment (e.g., desktop phones, copiers, fax machines, etc.); healthcare devices (e.g., pacemakers, biometric sensors, medical equipment, etc.); industrial equipment (e.g., robots, factory machinery, construction equipment, industrial sensors, etc.); retail equipment (e.g., vending machines, point of sale (POS) devices, Radio Frequency Identification (RFID) tags, etc.); smart city devices (e.g., street lamps, parking meters, waste management sensors, etc.); transportation and logistical equipment (e.g., turnstiles, rental car trackers, navigational devices, inventory monitors, etc.); and so forth.

In some embodiments, the network fabric 120 can support wired and wireless access as part of a single integrated infrastructure such that connectivity, mobility, and policy enforcement behavior are similar or the same for both wired and wireless endpoints. This can bring a unified experience for users, devices, and things that is independent of the access media.

In integrated wired and wireless deployments, control plane integration can be achieved with the WLC(s) 108 notifying the fabric control plane node(s) 110 of joins, roams, and disconnects by the wireless endpoints 130 such that the fabric control plane node(s) can have connectivity information about both wired and wireless endpoints in the network fabric 120, and can serve as the single source of truth for endpoints connected to the network fabric. For data plane integration, the WLC(s) 108 can instruct the fabric wireless access points 128 to form a VXLAN overlay tunnel to their adjacent fabric edge nodes 126. The AP VXLAN tunnel can carry segmentation and policy information to and from the fabric edge nodes 126, allowing connectivity and functionality identical or similar to that of a wired endpoint. When the wireless endpoints 130 join the network fabric 120 via the fabric wireless access points 128, the WLC(s) 108 can onboard the endpoints into the network fabric 120 and inform the fabric control plane node(s) 110 of the endpoints' Media Access Control (MAC) addresses. The WLC(s) 108 can then instruct the fabric wireless access points 128 to form VXLAN overlay tunnels to the adjacent fabric edge nodes 126. Next, the wireless endpoints 130 can obtain IP addresses for themselves via Dynamic Host Configuration Protocol (DHCP). Once that completes, the fabric edge nodes 126 can register the IP addresses of the wireless endpoint 130 to the fabric control plane node(s) 110 to form a mapping between the endpoints' MAC and IP addresses, and traffic to and from the wireless endpoints 130 can begin to flow.

FIG. 2 illustrates an example of a logical architecture 200 for an enterprise network (e.g., the enterprise network 100). One of ordinary skill in the art will understand that, for the logical architecture 200 and any system discussed in the present disclosure, there can be additional or fewer components in similar or alternative configurations. The illustrations and examples provided in the present disclosure are for conciseness and clarity. Other embodiments may include different numbers and/or types of elements but one of ordinary skill the art will appreciate that such variations do not depart from the scope of the present disclosure. In this example, the logical architecture 200 includes a management layer 202, a controller layer 220, a network layer 230 (such as embodied by the network fabric 120), a physical layer 240 (such as embodied by the various elements of FIG. 1), and a shared services layer 250.

The management layer 202 can abstract the complexities and dependencies of other layers and provide a user with tools and workflows to manage an enterprise network (e.g., the enterprise network 100). The management layer 202 can include a user interface 204, design functions 206, policy functions 208, provisioning functions 210, assurance functions 212, platform functions 214, and base automation functions 216. The user interface 204 can provide a user a single point to manage and automate the network. The user interface 204 can be implemented within a web application/web server accessible by a web browser and/or an application/application server accessible by a desktop application, a mobile app, a shell program or other command line interface (CLI), an Application Programming Interface (e.g., restful state transfer (REST), Simple Object Access Protocol (SOAP), Service Oriented Architecture (SOA), etc.), and/or other suitable interface in which the user can configure network infrastructure, devices, and things that are cloud-managed; provide user preferences; specify policies, enter data; review statistics; configure interactions or operations; and so forth. The user interface 204 may also provide visibility information, such as views of a network, network infrastructure, computing devices, and things. For example, the user interface 204 can provide a view of the status or conditions of the network, the operations taking place, services, performance, a topology or layout, protocols implemented, running processes, errors, notifications, alerts, network structure, ongoing communications, data analysis, and so forth.

The design functions 206 can include tools and workflows for managing site profiles, maps and floor plans, network settings, and IP address management, among others. The policy functions 208 can include tools and workflows for defining and managing network policies. The provisioning functions 210 can include tools and workflows for deploying the network. The assurance functions 212 can use machine learning and analytics to provide end-to-end visibility of the network by learning from the network infrastructure, endpoints, and other contextual sources of information. The platform functions 214 can include tools and workflows for integrating the network management system with other technologies. The base automation functions 216 can include tools and workflows to support the policy functions 208, the provisioning functions 210, the assurance functions 212, and the platform functions 214.

In some embodiments, the design functions 206, the policy functions 208, the provisioning functions 210, the assurance functions 212, the platform functions 214, and the base automation functions 216 can be implemented as microservices in which respective software functions are implemented in multiple containers communicating with each rather than amalgamating all tools and workflows into a single software binary. Each of the design functions 206, policy functions 208, provisioning functions 210, assurance functions 212, and platform functions 214 can be viewed as a set of related automation microservices to cover the design, policy authoring, provisioning, assurance, and cross-platform integration phases of the network lifecycle. The base automation functions 214 can support the top-level functions by allowing users to perform certain network-wide tasks.

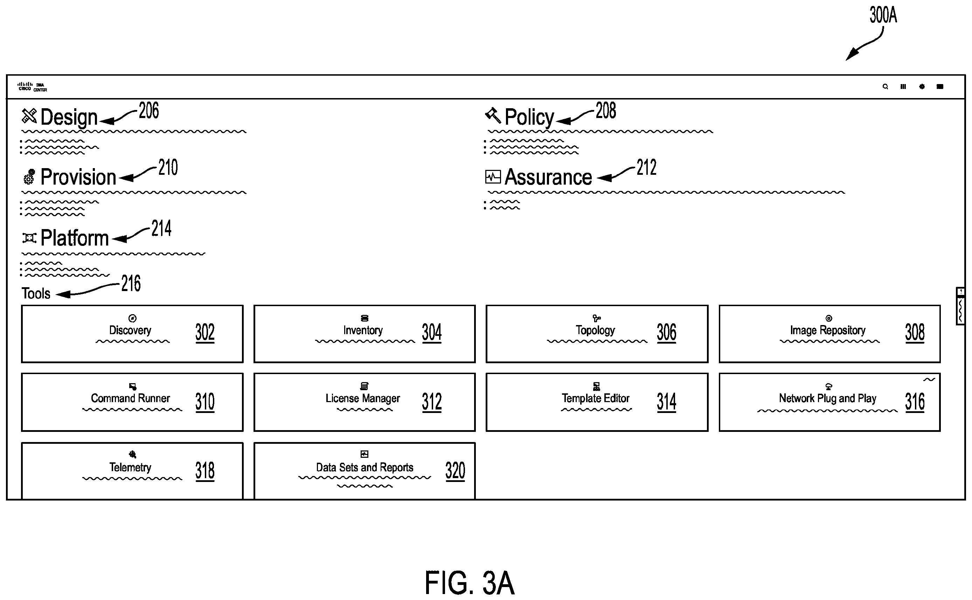

FIGS. 3A-3I illustrates examples of graphical user interfaces for implementing the user interface 204. Although FIGS. 3A-3I show the graphical user interfaces as comprising webpages displayed in a browser executing on a large form-factor general purpose computing device (e.g., server, workstation, desktop, laptop, etc.), the principles disclosed in the present disclosure are widely applicable to client devices of other form factors, including tablet computers, smart phones, wearable devices, or other small form-factor general purpose computing devices; televisions; set top boxes; IoT devices; and other electronic devices capable of connecting to a network and including input/output components to enable a user to interact with a network management system. One of ordinary skill will also understand that the graphical user interfaces of FIGS. 3A-3I are but one example of a user interface for managing a network. Other embodiments may include a fewer number or a greater number of elements.

FIG. 3A illustrates a graphical user interface 300A, which is an example of a landing screen or a home screen of the user interface 204. The graphical user interface 300A can include user interface elements for selecting the design functions 206, the policy functions 208, the provisioning functions 210, the assurance functions 212, and the platform functions 214. The graphical user interface 300A also includes user interface elements for selecting the base automation functions 216. In this example, the base automation functions 216 include:
- A network discovery tool 302 for automating the discovery of existing network elements to populate into inventory;
- An inventory management tool 304 for managing the set of physical and virtual network elements;
- A topology tool 306 for visualizing the physical topology of network elements;
- An image repository tool 308 for managing software images for network elements;
- A command runner tool 310 for diagnosing one or more network elements based on a CLI;
- A license manager tool 312 for administering visualizing software license usage in the network;
- A template editor tool 314 for creating and authoring CLI templates associated with network elements in a design profile;
- A network PnP tool 316 for supporting the automated configuration of network elements;
- A telemetry tool 318 for designing a telemetry profile and applying the telemetry profile to network elements; and
- A data set and reports tool 320 for accessing various data sets, scheduling data extracts, and generating reports in multiple formats (e.g., Post Document Format (PDF), comma-separate values (CSV), Tableau, etc.), such as an inventory data report, a software image management (SWIM) server report, and a client data report, among others.

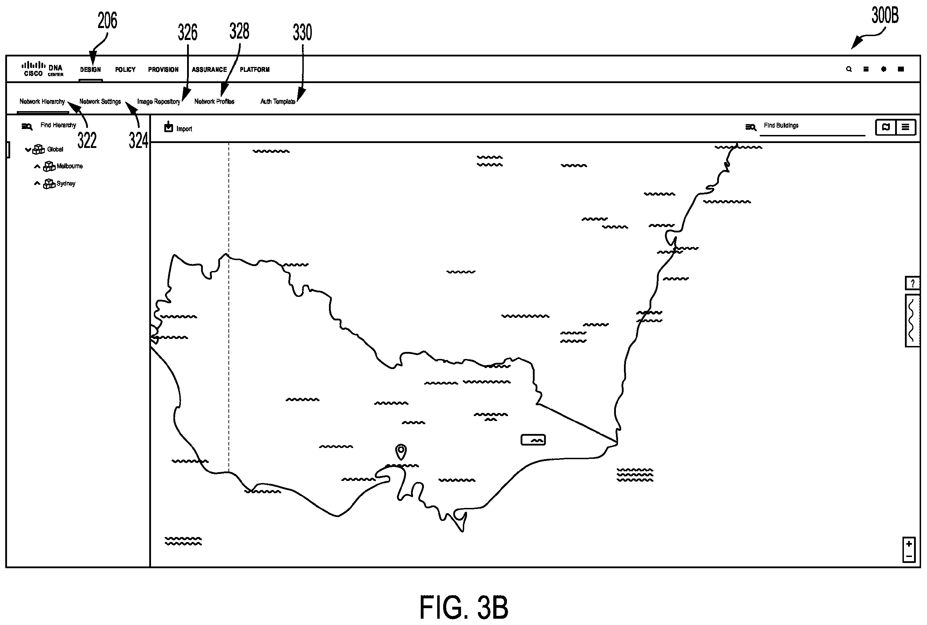

FIG. 3B illustrates a graphical user interface 300B, an example of a landing screen for the design functions 206. The graphical user interface 300B can include user interface elements for various tools and workflows for logically defining an enterprise network. In this example, the design tools and workflows include:
- A network hierarchy tool 322 for setting up the geographic location, building, and floor plane details, and associating these with a unique site id;
- A network settings tool 324 for setting up network servers (e.g., Domain Name System (DNS), DHCP, AAA, etc.), device credentials, IP address pools, service provider profiles (e.g., QoS classes for a WAN provider), and wireless settings;
- An image management tool 326 for managing software images and/or maintenance updates, setting version compliance, and downloading and deploying images;
- A network profiles tool 328 for defining LAN, WAN, and WLAN connection profiles (including Service Set Identifiers (SSIDs)); and
- An authentication template tool 330 for defining modes of authentication (e.g., closed authentication, Easy Connect, open authentication, etc.).

The output of the design workflow 206 can include a hierarchical set of unique site identifiers that define the global and forwarding configuration parameters of the various sites of the network. The provisioning functions 210 may use the site identifiers to deploy the network.

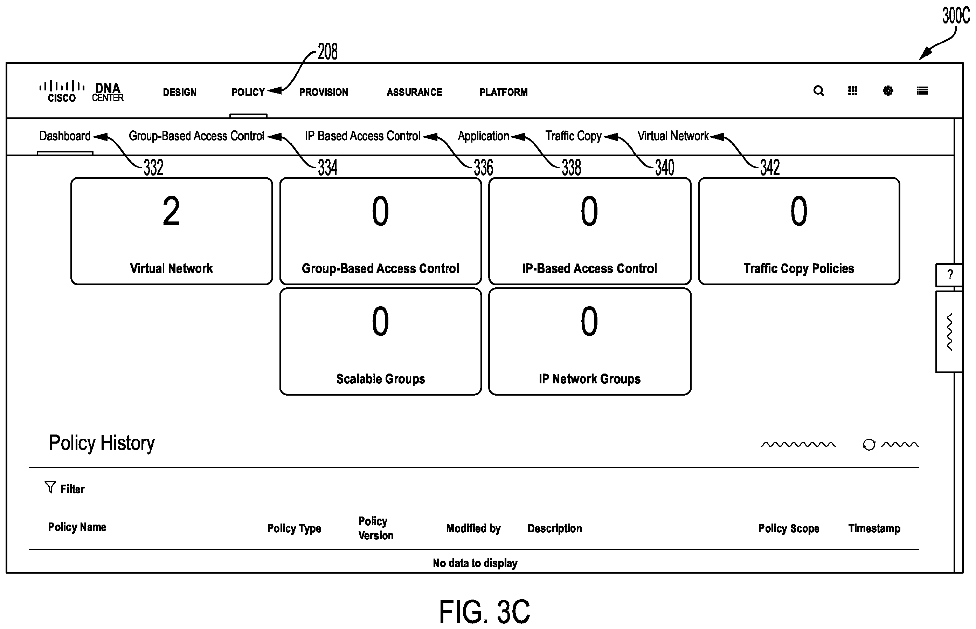

FIG. 3C illustrates a graphical user interface 300C, which is an example of a landing screen for the policy functions 208. The graphical user interface 300C can include various tools and workflows for defining network policies. In this example, the policy design tools and workflows include:
- A policy dashboard 332 for viewing virtual networks, group-based access control policies, IP-based access control policies, traffic copy policies, scalable groups, and IP network groups. The policy dashboard 332 can also show the number of policies that have failed to deploy. The policy dashboard 332 can provide a list of policies and the following information about each policy: policy name, policy type, policy version (e.g., iteration of policy which can be incremented each time the policy changes), user who has modified the policy, description, policy scope (e.g., user and device groups or applications that the policy affects), and timestamp;
- A group-based access control policies tool 334 for managing group-based access controls or Service Group Access Control Lists (SGACLs). A group-based access control policy can define scalable groups and an access contract (e.g., rules that make up the access control policies, such as permit or deny when traffic matches on the policy);
- An IP-based access control policies tool 336 for managing IP-based access control policies. An IP-based access control can define an IP network group (e.g., IP subnets that share same access control requirements) and an access contract;
- An application policies tool 338 for configuring QoS for application traffic. An application policy can define application sets (e.g., sets of applications with similar network traffic needs) and a site scope (e.g., the site to which an application policy is defined);
- A traffic copy policies tool 340 for setting up an Encapsulated Remote Switched Port Analyzer (ERSPAN) configuration such that network traffic flow between two entities is copied to a specified destination for monitoring or troubleshooting. A traffic copy policy can define the source and destination of the traffic flow to copy and a traffic copy contract that specifies the device and interface where the copy of traffic is sent; and
- A virtual network policies tool 343 for segmenting the physical network into multiple logical networks.

The output of the policy workflow 208 can include a set of virtual networks, security groups, and access and traffic policies that define the policy configuration parameters of the various sites of the network. The provisioning functions 210 may use the virtual networks, groups, and policies for deployment in the network.

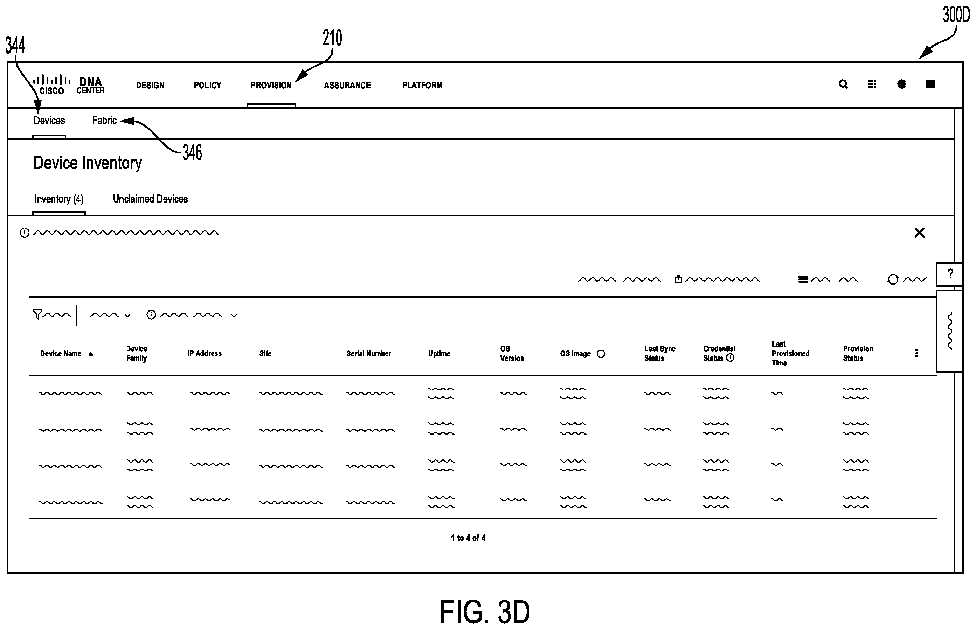

FIG. 3D illustrates a graphical user interface 300D, which is an example of a landing screen for the provisioning functions 210. The graphical user interface 300D can include various tools and workflows for deploying the network. In this example, the provisioning tools and workflows include:
- A device provisioning tool 344 for assigning devices to the inventory and deploying the required settings and policies, and adding devices to sites; and
- A fabric provisioning tool 346 for creating fabric domains and adding devices to the fabric.

The output of the provisioning workflow 210 can include the deployment of the network underlay and fabric overlay, as well as policies (defined in the policy workflow 208).

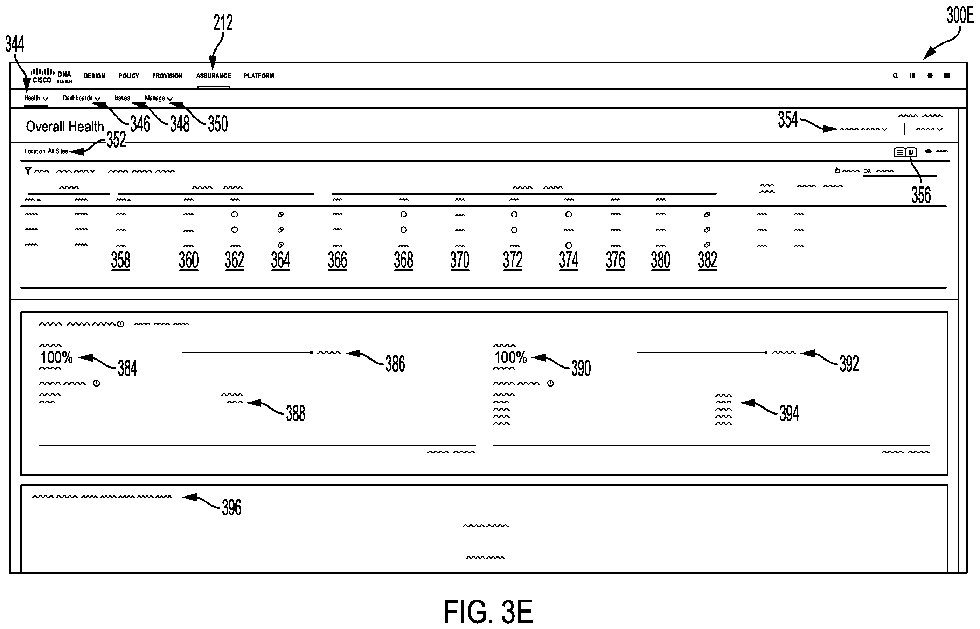

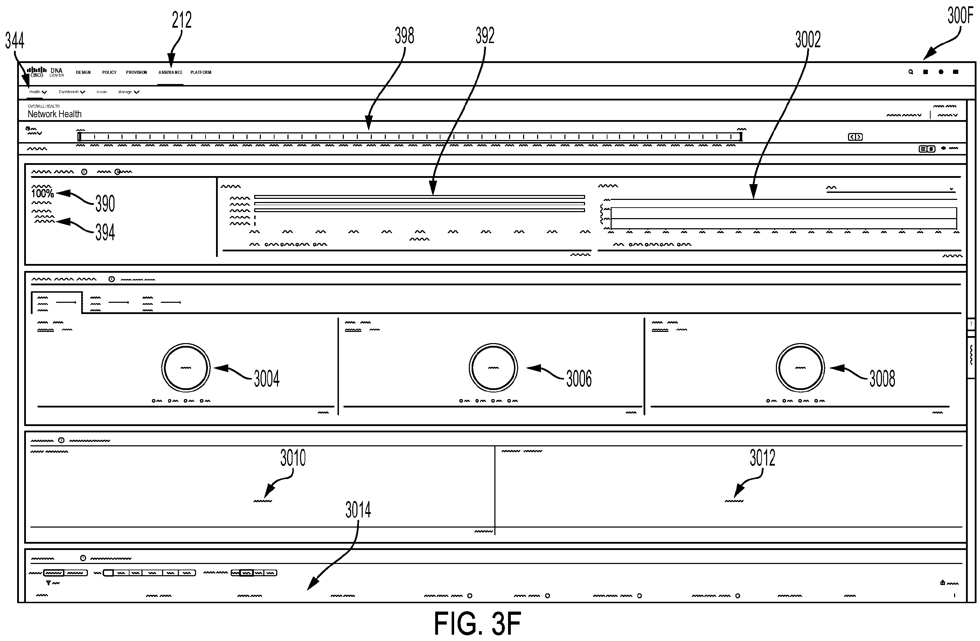

FIG. 3E illustrates a graphical user interface 300E, an example of a landing screen for the assurance functions 212. The graphical user interface 300E can include various tools and workflows for managing the network. In this example, the assurance tools and workflows include:
- A health overview tool 344 for providing a global view of the enterprise network, including network infrastructure devices and endpoints. The user interface element (e.g., drop-down menu, a dialog box, etc.) associated with the health overview tool 344 can also be toggled to switch to additional or alternative views, such as a view of the health of network infrastructure devices alone, a view of the health of all wired and wireless clients, and a view of the health of applications running in the network as discussed further below with respect to FIGS. 3F-3H;
- An assurance dashboard tool 346 for managing and creating custom dashboards;
- An issues tool 348 for displaying and troubleshooting network issues; and
- A sensor management tool 350 for managing sensor-driven tests.

The graphical user interface 300E can also include a location selection user interface element 352, a time period selection user interface element 354, and a view type user interface element 356. The location selection user interface element 354 can enable a user to view the overall health of specific sites (e.g., as defined via the network hierarchy tool 322) and/or network domains (e.g., LAN, WLAN, WAN, data center, etc.). The time period selection user interface element 356 can enable display of the overall health of the network over specific time periods (e.g., last 3 hours, last 24 hours, last 7 days, custom, etc.). The view type user interface element 355 can enable a user to toggle between a geographical map view of the sites of the network (not shown) or a hierarchical site/building view (as shown).

Within the hierarchical site/building view, rows can represent the network hierarchy (e.g. sites and buildings as defined by the network hierarchy tool 322); column 358 can indicate the number of healthy clients as a percentage; column 360 can indicate the health of wireless clients by a score (e.g., 1-10), color and/or descriptor (e.g., red or critical associated with a health score 1 to 3 indicating the clients have critical issues, orange or warning associated with a health score of 4 to 7 indicating warnings for the clients, green or no errors or warnings associated with a health score of 8 to 10, grey or no data available associated with a health score of null or 0), or other indicator; column 362 can indicate the health of wired clients by score, color, descriptor, and so forth; column 364 can include user interface elements for drilling down to the health of the clients associated with a hierarchical site/building; column 366 can indicate the number of healthy network infrastructure devices as a percentage; column 368 can indicate the health of access switches by score, color, descriptor, and so forth; column 370 can indicate the health of core switches by score, color, descriptor, and so forth; column 372 can indicate the health of distribution switches by score, color, descriptor, and so forth; column 374 can indicate the health of routers by score, color, descriptor, and so forth; column 376 can indicate the health of WLCs by score, color, descriptor, and so forth; column 378 can indicate the health of other network infrastructure devices by score, color, descriptor, and so forth; and column 380 can include user interface elements for drilling down to the health of the network infrastructure devices associated with a hierarchical site/building. In other embodiments, client devices may be grouped in other ways besides wired or wireless, such as by device type (e.g., desktop, laptop, mobile phone, IoT device or more specific type of IoT device, etc.), manufacturer, model, operating system, and so forth. Likewise, network infrastructure devices can also be grouped along these and other ways in additional embodiments.

The graphical user interface 300E can also include an overall health summary user interface element (e.g., a view, pane, tile, card, container, widget, dashlet, etc.) that includes a client health summary user interface element 384 indicating the number of healthy clients as a percentage, a color coded trend chart 386 indicating that percentage over a specific time period (e.g., as selected by the time period selection user interface element 354), a user interface element 388 breaking down the number of healthy clients as a percentage by client type (e.g., wireless, wired), a network infrastructure health summary user interface element 390 indicating the number of health network infrastructure devices as a percentage, a color coded trend chart 392 indicating that percentage over a specific time period, and a user interface element 394 breaking down the number of network infrastructure devices as a percentage by network infrastructure device type (e.g., core switch, access switch, distribution switch, etc.).

The graphical user interface 300E can also include an issues user interface element 396 listing issues, if any, that must be addressed. Issues can be sorted based on timestamp, severity, location, device type, and so forth. Each issue may be selected to drill down to view a more detailed view of the selected issue.

FIG. 3F illustrates a graphical user interface 300F, which is an example of a screen for an overview of the health of network infrastructure devices alone, which may be navigated to, for instance, by toggling the health overview tool 344. The graphical user interface 300F can include a timeline slider 398 for selecting a more granular time range than a time period selection user interface element (e.g., the time period selection user interface element 354). The graphical user interface 300F can also include similar information to that shown in the graphical user interface 300E, such as a user interface element comprising a hierarchical site/building view and/or geographical map view similar to that of the graphical user interface 300E (except providing information only for network infrastructure devices) (not shown here), the number of healthy network infrastructure devices as a percentage 390, the color coded trend charts 392 indicating that percentage by device type, the breakdown of the number of healthy network infrastructure devices by device type 394, and so forth. In addition, the graphical user interface 300F can display a view of the health of network infrastructure devices by network topology (not shown). This view can be interactive, such as by enabling a user to zoom in or out, pan left or right, or rotate the topology (e.g., by 90 degrees).

In this example, the graphical user interface 300F also includes a color coded trend chart 3002 showing the performance of the network infrastructure devices over a specific time period; network health by device type tabs including a system health chart 3004 providing system monitoring metrics (e.g., CPU utilization, memory utilization, temperature, etc.), a data plane connectivity chart 3006 providing data plane metrics, such as uplink availability and link errors, and a control plane connectivity chart 3008 providing control plane metrics for each device type; an AP analytics user interface element including an up and down color coded chart 3010 that provides AP status information (e.g., the number of APs connected to the network, and the number of APs not connected to the network, etc.) and a top number N of APs by client count chart 3012 that provides information about the APs that have the highest number of clients; a network devices table 3014 enabling a user to filter (e.g., by device type, health, or custom filters), view, and export network device information. A detailed view of the health of each network infrastructure device can also be provided by selecting that network infrastructure device in the network devices table 3014.

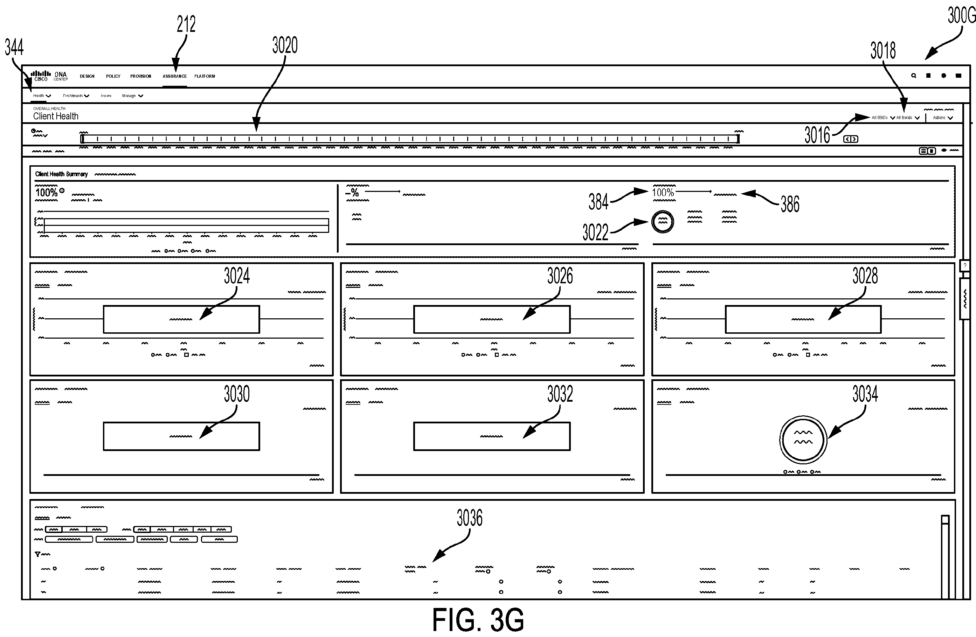

FIG. 3G illustrates a graphical user interface 300G, which is an example of a screen for an overview of the health of client devices, which may be navigated to, for instance, by toggling the health overview tool 344. The graphical user interface 300G can include an SSID user interface selection element 3016 for viewing the health of wireless clients by all SSIDs or a specific SSID, a band frequency user interface selection element 3018 for viewing the health of wireless clients by all band frequencies or a specific band frequency (e.g., 2.4 GHz, 5 GHz, etc.), and a time slider 3020 that may operate similarly to the time slider 398.

The graphical user interface 300G can also include a client health summary user interface element that provides similar information to that shown in the graphical user interface 300E, such as the number of healthy clients as a percentage 384 and a color coded trend chart 386 indicating that percentage over a specific time period for each grouping of client devices (e.g., wired/wireless, device type, manufacturer, model, operating system, etc.). In addition, the client health summary user interface element can include a color-coded donut chart that provides a count of poor (e.g., red and indicating a client health score of 1 to 3), fair (e.g., orange and indicating a client health score of 4 to 7), good (e.g., green and indicating a health score of 8 to 10), and inactive (e.g., grey and indicating a health score that is null or 0) client devices. The count of client devices associated with each color, health score, health descriptor, and so forth may be displayed by a selection gesture directed toward that color (e.g., tap, double tap, long press, hover, click, right-click, etc.).

The graphical user interface 300G can also include a number of other client health metric charts in all sites or a selected site over a specific time period, such as:
- Client onboarding times 3024;
- Received Signal Strength Indications (RSSIs) 3026;
- Connectivity signal-to-noise ratios (SNRs) 3028;
- Client counts per SSID 3030;
- Client counts per band frequency 3032;
- DNS requests and response counters (not shown); and
- Connectivity physical link state information 3034 indicating the distribution of wired client devices that had their physical links up, down, and had errors.

In addition, the graphical user interface 300G can include a client devices table 3036 enabling a user to filter (e.g., by device type, health, data (e.g., onboarding time > threshold, association time > threshold, DHCP > threshold, AAA > threshold, RSSI > threshold, etc.), or custom filters), view, and export client device information (e.g., user identifier, hostname, MAC address, IP address, device type, last heard, location, VLAN identifier, SSID, overall health score, onboarding score, connection score, network infrastructure device to which the client device is connected, etc.). A detailed view of the health of each client device can also be provided by selecting that client device in the client devices table 3036.

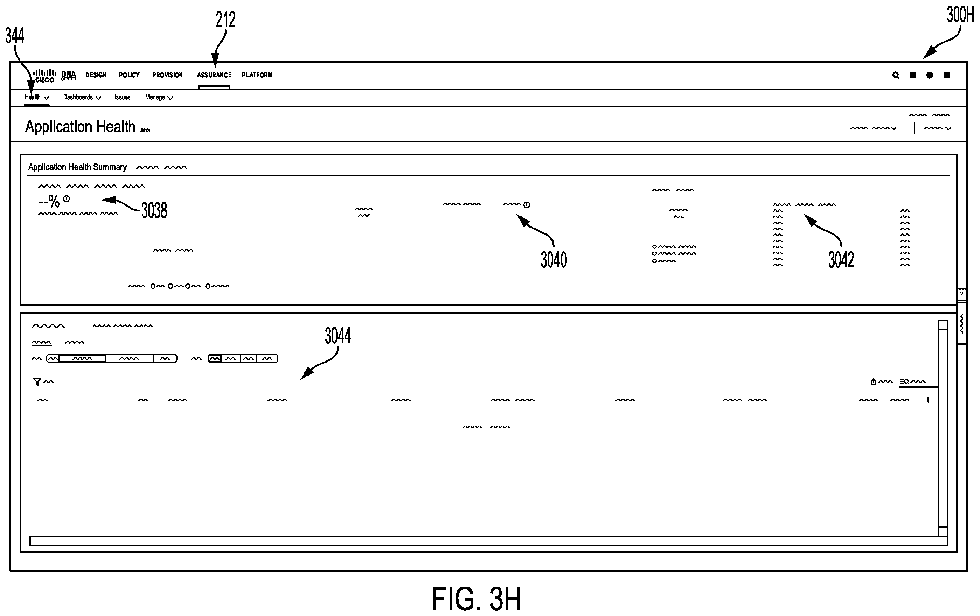

FIG. 3H illustrates a graphical user interface 300H, which is an example of a screen for an overview of the health of applications, which may be navigated to, for instance, by the toggling the health overview tool 344. The graphical user interface 300H can include application health summary user interface element including a percentage 3038 of the number of healthy applications as a percentage, a health score 3040 for each application or type of application (e.g., business relevant, business irrelevant, default; HTTP, VoIP, chat, email, bulk transfer, multimedia/streaming, etc.) running in the network, a top number N of applications by usage chart 3042. The health score 3040 can be calculated based on an application's qualitative metrics, such as packet loss, network latency, and so forth.

In addition, the graphical user interface 300H can also include an applications table 3044 enabling a user to filter (e.g., by application name, domain name, health, usage, average throughput, traffic class, packet loss, network latency, application latency, custom filters, etc.), view, and export application information. A detailed view of the health of each application can also be provided by selecting that application in the applications table 3044.

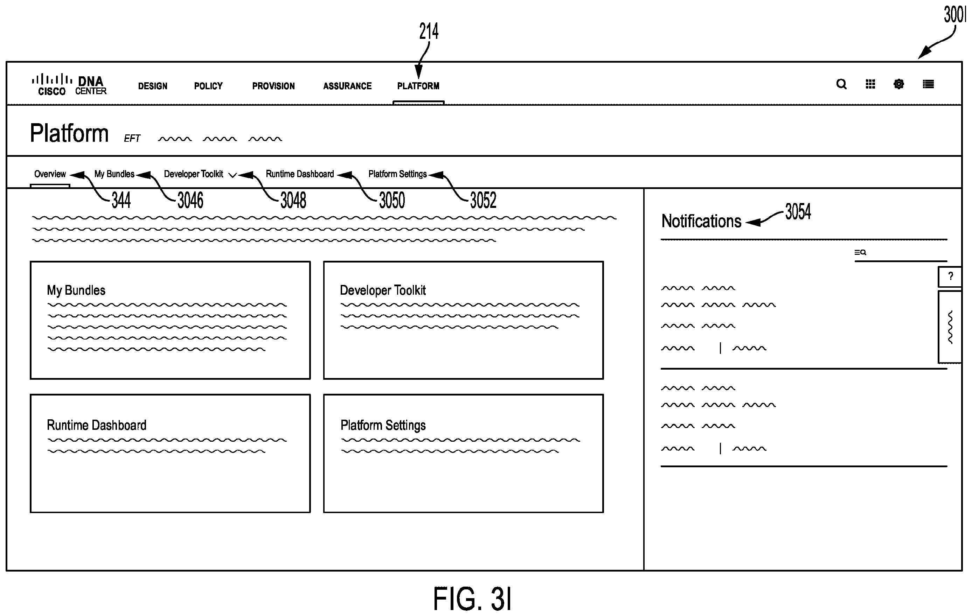

FIG. 3I illustrates an example of a graphical user interface 300I, which is an example of a landing screen for the platform functions 210. The graphical user interface 300I can include various tools and workflows for integrating with other technology systems. In this example, the platform integration tools and workflows include:
- A bundles tool 3046 for managing packages of domain-specific APIs, workflows, and other features for network programming and platform integration;
- A developer toolkit 3048 for accessing an API catalog listing the available APIs and methods (e.g., GET, PUT, POST, DELETE, etc.), descriptions, runtime parameters, return codes, model schemas, and so forth. In some embodiments, the developer toolkit 3048 can also include a "Try It" button to permit a developer to experiment with a particular API to better understand its behavior;
- A runtime dashboard 3050 for viewing and analyzing basic metrics or API and integration flow usage;
- A platform settings tool 3052 to view and set global or bundle-specific settings that define integration destinations and event consumption preferences; and
- A notifications user interface element 3054 for presenting notifications regarding the availability of software updates, security threats, and so forth.

Returning to FIG. 2, the controller layer 220 can comprise subsystems for the management layer 220 and may include a network control platform 222, a network data platform 224, and AAA services 226. These controller subsystems can form an abstraction layer to hide the complexities and dependencies of managing many network elements and protocols.

The network control platform 222 can provide automation and orchestration services for the network layer 230 and the physical layer 240, and can include the settings, protocols, and tables to automate management of the network and physical layers. For example, the network control platform 230 can provide the design functions 206, the provisioning functions 210, the policy functions 208, and/or the assurance functions 212. In addition, the network control platform 230 can include tools and workflows for discovering switches, routers, wireless controllers, and other network infrastructure devices (e.g., the network discovery tool 302); maintaining network and endpoint details, configurations, and software versions (e.g., the inventory management tool 304); Plug-and-Play (PnP) for automating deployment of network infrastructure (e.g., the network PnP tool 316), Path Trace for creating visual data paths to accelerate the troubleshooting of connectivity problems, Easy QoS for automating quality of service to prioritize applications across the network, and Enterprise Service Automation (ESA) for automating deployment of physical and virtual network services, among others. The network control platform 222 can communicate with network elements using Network Configuration (NETCONF)/Yet Another Next Generation (YANG), Simple Network Management Protocol (SNMP), Secure Shell (SSH)/Telnet, and so forth. In some embodiments, the Cisco^{®} Network Control Platform (NCP) can operate as the network control platform 222

The network data platform 224 can provide for network data collection, analytics, and assurance, and may include the settings, protocols, and tables to monitor and analyze network infrastructure and endpoints connected to the network. The network data platform 224 can collect multiple types of information from network infrastructure devices, including syslog, SNMP, NetFlow, Switched Port Analyzer (SPAN), and streaming telemetry, among others. The network data platform 224 can also collect use contextual information shared from
In some embodiments, one or more Cisco DNA^{™} Center appliances can provide the functionalities of the management layer 210, the network control platform 222, and the network data platform 224. The Cisco DNA^{™} Center appliances can support horizontal scalability by adding additional Cisco DNA^{™} Center nodes to an existing cluster; high availability for both hardware components and software packages; backup and store mechanisms to support disaster discovery scenarios; role-based access control mechanisms for differentiated access to users, devices, and things based on roles and scope; and programmable interfaces to enable integration with third party vendors. The Cisco DNA^{™} Center appliances can also be cloud-tethered to provide for the upgrade of existing functions and additions of new packages and applications without having to manually download and install them.

The AAA services 226 can provide identity and policy services for the network layer 230 and physical layer 240, and may include the settings, protocols, and tables to support endpoint identification and policy enforcement services. The AAA services 226 can provide tools and workflows to manage virtual networks and security groups, and to create group-based policies and contracts. The AAA services 226 can identify and profile network infrastructure devices and endpoints using AAA/RADIUS, 802.1X, MAC Authentication Bypass (MAB), web authentication, and EasyConnect, among others. The AAA services 226 can also collect and use contextual information from the network control platform 222, the network data platform 224, and the shared services 250, among others. In some embodiments, Cisco^{®} ISE can provide the AAA services 226.

The network layer 230 can be conceptualized as a composition of two layers, an underlay 234 comprising physical and virtual network infrastructure (e.g., routers, switches, WLCs, etc.) and a Layer 3 routing protocol for forwarding traffic, and an overlay 232 comprising a virtual topology for logically connecting wired and wireless users, devices, and things and applying services and policies to these entities. Network elements of the underlay 234 can establish connectivity between each other, such as via Internet Protocol (IP). The underlay may use any topology and routing protocol.

In some embodiments, the network controller 104 can provide a local area network (LAN) automation service, such as implemented by Cisco DNA^{™} Center LAN Automation, to automatically discover, provision, and deploy network devices. Once discovered, the automated underlay provisioning service can leverage Plug and Play (PnP) to apply the required protocol and network address configurations to the physical network infrastructure. In some embodiments, the LAN automation service may implement the Intermediate System to Intermediate System (IS-IS) protocol. Some of the advantages of IS-IS include neighbor establishment without IP protocol dependencies, peering capability using loopback addresses, and agnostic treatment of IPv4, IPv6, and non-IP traffic.

The overlay 232 can be a logical, virtualized topology built on top of the physical underlay 234, and can include a fabric data plane, a fabric control plane, and a fabric policy plane. In some embodiments, the fabric data plane can be created via packet encapsulation using Virtual Extensible LAN (VXLAN) with Group Policy Option (GPO). Some of the advantages of VXLAN-GPO include its support for both Layer 2 and Layer 3 virtual topologies (overlays), and its ability to operate over any IP network with built-in network segmentation.

In some embodiments, the fabric control plane can implement Locator/ID Separation Protocol (LISP) for logically mapping and resolving users, devices, and things. LISP can simplify routing by removing the need for each router to process every possible IP destination address and route. LISP can achieve this by moving remote destination to a centralized map database that allows each router to manage only its local routes and query the map system to locate destination endpoints.

The fabric policy plane is where intent can be translated into network policy. That is, the policy plane is where the network operator can instantiate logical network policy based on services offered by the network fabric 120, such as security segmentation services, quality of service (QoS), capture/copy services, application visibility services, and so forth.

Segmentation is a method or technology used to separate specific groups of users or devices from other groups for the purpose of reducing congestion, improving security, containing network problems, controlling access, and so forth. As discussed, the fabric data plane can implement VXLAN encapsulation to provide network segmentation by using the virtual network identifier (VNI) and Scalable Group Tag (SGT) fields in packet headers. The network fabric 120 can support both macro-segmentation and micro-segmentation. Macro-segmentation logically separates a network topology into smaller virtual networks by using a unique network identifier and separate forwarding tables. This can be instantiated as a virtual routing and forwarding (VRF) instance and referred to as a virtual network (VN). That is, a VN is a logical network instance within the network fabric 120 defined by a Layer 3 routing domain and can provide both Layer 2 and Layer 3 services (using the VXLAN VNI to provide both Layer 2 and Layer 3 segmentation). Micro-segmentation logically separates user or device groups within a VN, by enforcing source to destination access control permissions, such as by using access control lists (ACLs). A scalable group is a logical object identifier assigned to a group of users, devices, or things in the network fabric 120. It can be used as source and destination classifiers in Scalable Group ACLs (SGACLs). The SGT can be used to provide address-agnostic group-based policies.

In some embodiments, the fabric control plane node 110 may implement the Locator/Identifier Separation Protocol (LISP) to communicate with one another and with the management cloud 102. Thus, the control plane nodes may operate a host tracking database, a map server, and a map resolver. The host tracking database can track the endpoints 130 connected to the network fabric 120 and associate the endpoints to the fabric edge nodes 126, thereby decoupling an endpoint's identifier (e.g., IP or MAC address) from its location (e.g., closest router) in the network.

The physical layer 240 can comprise network infrastructure devices, such as switches and routers 110, 122, 124, and 126 and wireless elements 108 and 128 and network appliances, such as the network controller appliance(s) 104, and the AAA appliance(s) 106.

The shared services layer 250 can provide an interface to external network services, such as cloud services 252; Domain Name System (DNS), DHCP, IP Address Management (IPAM), and other network address management services 254; firewall services 256; Network as a Sensor (Naas)/Encrypted Threat Analytics (ETA) services; and Virtual Network Functions (VNFs) 260; among others. The management layer 202 and/or the controller layer 220 can share identity, policy, forwarding information, and so forth via the shared services layer 250 using APIs.

FIG. 4 illustrates an example of a physical topology for a multi-site enterprise network 400. In this example, the network fabric comprises fabric sites 420A and 420B. The fabric site 420A can include a fabric control node 410A, fabric border nodes 422A and 422B, fabric intermediate nodes 424A and 424B (shown here in dashed line and not connected to the fabric border nodes or the fabric edge nodes for simplicity), and fabric edge nodes 426A-D. The fabric site 420B can include a fabric control node 410B, fabric border nodes 422C-E, fabric intermediate nodes 424C and 424D, and fabric edge nodes 426D-F. Multiple fabric sites corresponding to a single fabric, such as the network fabric of FIG. 4, can be interconnected by a transit network. A transit network can be a portion of a network fabric that has its own control plane nodes and border nodes but does not have edge nodes. In addition, a transit network shares at least one border node with each fabric site that it interconnects.

In general, a transit network connects a network fabric to the external world. There are several approaches to external connectivity, such as a traditional IP network 436, traditional WAN 438A, Software-Defined WAN (SD-WAN) (not shown), or Software-Defined Access (SD-Access) 438B. Traffic across fabric sites, and to other types of sites, can use the control plane and data plane of the transit network to provide connectivity between these sites. A local border node can operate as the handoff point from the fabric site, and the transit network can deliver traffic to other sites. The transit network may use additional features. For example, if the transit network is a WAN, then features like performance routing may also be used. To provide end-to-end policy and segmentation, the transit network should be cable of carrying endpoint context information (e.g., VRF, SGT) across the network. Otherwise, a re-classification of the traffic may be needed at the destination site border.

The local control plane in a fabric site may only hold state relevant to endpoints that are connected to edge nodes within the local fabric site. The local control plane can register local endpoints via local edge nodes, as with a single fabric site (e.g., the network fabric 120). An endpoint that isn't explicitly registered with the local control plane may be assumed to be reachable via border nodes connected to the transit network. In some embodiments, the local control plane may not hold state for endpoints attached to other fabric sites such that the border nodes do not register information from the transit network. In this manner, the local control plane can be independent of other fabric sites, thus enhancing overall scalability of the network.

The control plane in the transit network can hold summary state for all fabric sites that it interconnects. This information can be registered to the transit control plane by border from different fabric sites. The border nodes can register EID information from the local fabric site into the transit network control plane for summary EIDs only and thus further improve scalability.

The multi-site enterprise network 400 can also include a shared services cloud 432. The shared services cloud 432 can comprise one or more network controller appliances 404, one or more AAA appliances 406, and other shared servers (e.g., DNS; DHCP; IPAM; SNMP and other monitoring tools; NetFlow, syslog, and other data collectors, etc.) may reside. These shared services can generally reside outside of the network fabric and in a global routing table (GRT) of an existing network. In this case, some method of inter-VRF routing may be required. One option for inter-VRF routing is to use a fusion router, which can be an external router that performs inter-VRF leaking (e.g., import/export of VRF routes) to fuse the VRFs together. Multi-Protocol can be used for this route exchange since it can inherently prevent routing loops (e.g., using the AS_PATH attribute). Other routing protocols can also be used but may require complex distribute-lists and prefix-lists to prevent loops.

However, there can be several disadvantages in using a fusion router to achieve inter-VN communication, such as route duplication because routes leaked from one VRF to another are programmed in hardware tables and can result in more TCAM utilization, manual configuration at multiple touch points wherever route-leaking is implemented, loss of SGT context because SGTs may not be maintained across VRFs and must be re-classified once the traffic enters the other VRF, and traffic hairpinning because traffic may need to be routed to the fusion router, and then back to the fabric border node.

SD-Access Extranet can provide a flexible and scalable method for achieving inter-VN communications by avoiding route duplication because inter-VN lookup occurs in the fabric control plane (e.g., software) such that route entries do not need to be duplicated in hardware; providing a single touchpoint because the network management system (e.g., Cisco DNA^{™} Center) can automate the inter-VN lookup policy, making it a single point of management; maintaining SGT context because the inter-VN lookup occurs in the control plane node(s) (e.g., software), and avoids hair-pinning because inter-VN forwarding can occur at the fabric edge (e.g., the same intra-VN) so traffic does not need to hairpin at the border node. Another advantage is that a separate VN can be made for each of the common resources that are needed (e.g., a Shared Services VN, an Internet VN, a data center VN, etc.).

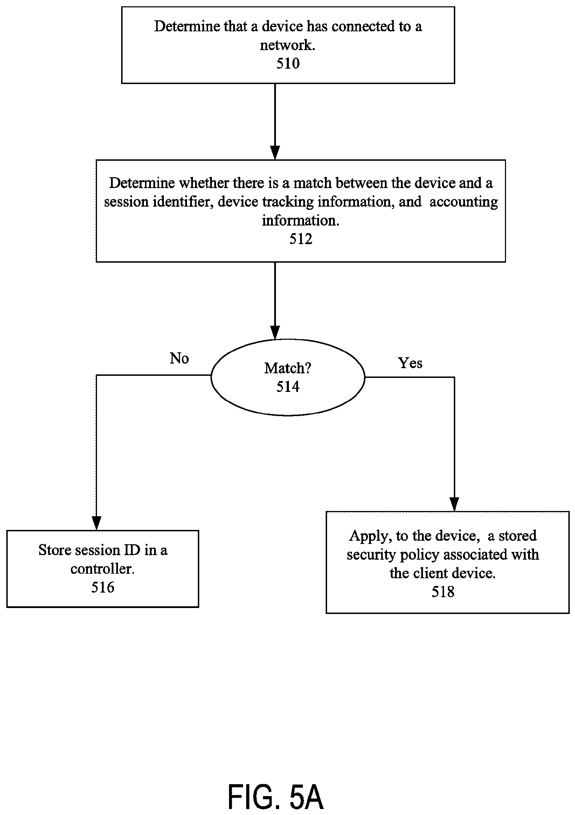

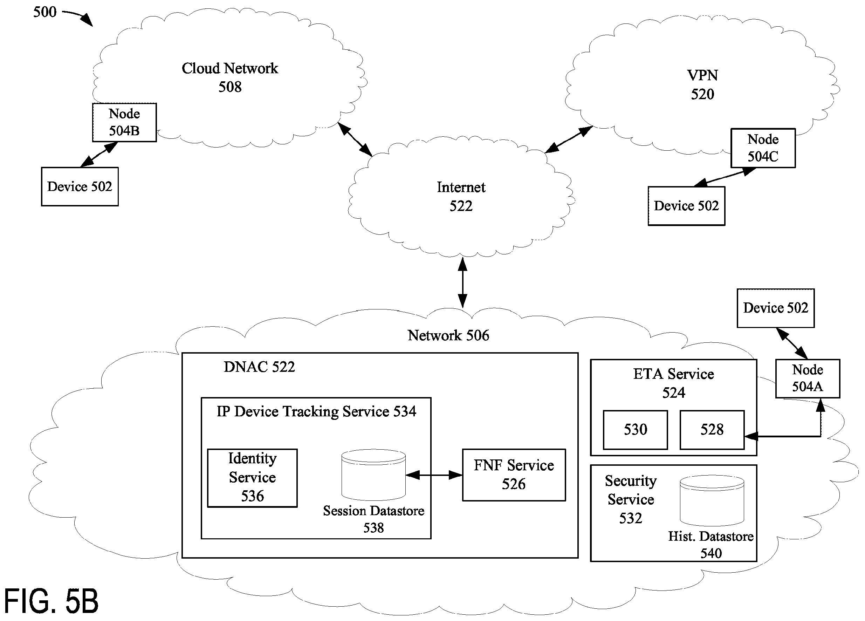

FIG. 5A illustrates a flowchart representation of enabling entitlement to follow a device in a network in accordance with some embodiments, and FIG. 5B shows an example schematic diagram of a multiple network environment that follows a device to apply consistent entitlements in accordance with some embodiments. System 500 can provide for tracking a device at a network independent of where the device connects to a network, even if the device hops across different networks.

In system 500, network 506 can be communicatively coupled with multiple other networks. The other networks may be networks of any type - any number and types of networks can be connected to network 506. In the embodiment shown, for example, network 506 is connected with cloud network 508 and virtual private network (VPN) 520 through internet 522. Device 502 can initially connect with node 504A of network 506, and then subsequently reconnect with node 504C on VPN 520.

A method can track a device at multiple networks independent of where the device connects by determining that device 502 has connected to one of the networks (e.g., network 506) (step 510). For example, in some embodiments system 500 can identify that device 502 has connected to network 506, VPN 520, and/or cloud network 508 by periodically polling (via, for example, a controller for a management control center, such as the Cisco DNA Center 522) all devices for a newly connected device. In some embodiments Cisco DNA Center 522 can receive a notification from a Simple Network Management Protocol (SNMP) trap that device 522 has connected to one of the networks.

Device 502 can be assigned with a network service entitlement when it attaches to any of the networks for the first time. The network service entitlement can be based on device 502's authorization and security posture with respect to that attachment point and network. For example, the network service entitlement for device 502 can include access control lists (ACL), Quality of Service (QoS), virtual local area network (VLAN) policies, etc. When the device moves to a different port or network, the entitlement can remain consistent across networks. This can prevent a user, such as an employee or student, who may attempt to evade a corporate patch and/or upgrade requirement by going to another, less secure network (such as a guest network).

For example, system 500 can automate the provision of an encrypted traffic analytics (ETA) service 524 and a Flexible NetFlow (FNF) service 526 on the network infrastructure comprising devices (e.g., such as, but not limited to, routers and switches) organized in a layered architecture (e.g., aggregation/edge). For example, the automated provision of the ETA service 524 and/or FNF service 526 can be handled by provision service 528 in network 506, and can be personalized to the service entitlements of device 502.

The ETA service 524 can, in some embodiments, monitor traffic for threats and malware. The ETA service 524 can maintain the integrity of the encryption. This can be done through one or more models (e.g., for example, one or more machine learning models) in models service 530 that can take advantage of a unique and diverse set of network flow data features including, but not limited to: TLS handshake metadata, DNS contextual flows linked to the encrypted flow, and the HTTP headers of HTTP-contextual flows from the same source IP address. The differences between malicious and benign traffic's use of TLS, DNS, and HTTP on millions of unique flows can be studied and applied to the models, picking out the features that indicate malware.

The FNF service 526 can, in some embodiments, optimize the network infrastructure, reducing operation costs and improving capacity planning and security incident detection with increased flexibility and scalability. The ability to characterize IP traffic and identify its source, traffic destination, timing, and application information can be critical for network availability, performance, and troubleshooting. The monitoring of IP traffic flows can increase the accuracy of capacity planning and ensure that resource allocation supports organizational goals. The FNF service 526 can help administrators determine how to optimize resource usage, plan network capacity, and identify the optimal application layer for Quality of Service (QoS). It can play a role in network security by detecting Denial of Service (DoS) attacks and network-propagated worms.

In some embodiments, one of the criteria for fine grained ETA enablement to selectively forward flow to threat analytics is to enable the ETA service 524 for specific high risk and high intellectual value endpoint devices, e.g. a Windows laptop of an employee. Guest networks are not normally enabled for ETA service 524 and can be excluded from threat analytics in security service 532 via a Host Group. However, if the device of the employee (e.g., device 502) moves to a guest network (e.g., cloud network 508), the employee session can be followed into the cloud network 508 and then continue to monitor the flow via ETA service 524. So ETA service 524 can be used both to follow the session, as well as to decide what flow to send to threat analytics in security service 532.

In some embodiments, in response to determining that device 502 has connected to network 506, ETA service 524 can collect from node 504A initial SSL handshake packets exchange from device 502 and send it as NetFlow to Cisco DNA Center 522. In embodiments the analytics flow can include the 5-tuple plus the SSL initial data packet. A controller (e.g., Cisco DNA Center 522) can add the ability to enable passive collection of the analytics flow from ETA service 524 that includes the initial SSL handshake packet at the interface where a host (e.g., device 502) is seen to be connected (e.g., from SNMP ifTable and access port configuration, for example). In some embodiments, this technique does not require that analytics flow from ETA service 524 be enabled by default everywhere in order to collect the SSL handshake. It can be triggered, for example, when device 502 is seen to be connected for the very first time.

In some embodiments, IP Device Tracking (IPDT) Service 534, in conjunction with a Remote Authentication Dial-In User Service (RADIUS) event and session identification (e.g., session ID), can detect the very first time device 502 connects. For example, system 500 can determine whether there is a match between device 502, and the session ID and device tracking information (such as a combination of IP device tracking information and accounting information) (step 512).

IPDT service 534 can keep track of connected hosts (by, for example, an association of MAC and IP address). For example, IPDT service 534 can send unicast Address Resolution Protocol (ARP) probes with a default interval of a period of time (e.g., 30 seconds). These probes can be sent to the MAC address of device 502 connected on the other side of the link, and use Layer 2 (L2) as the default source of the MAC address of the physical interface out of which the ARP goes, and a sender IP address of 0.0.0.0 (based on, for example, the ARP Probe definition listed in Request For Comments (RFC) 5227). IPDT service 534 can enable node 504A (e.g., a switch, for example), to obtain and maintain a list of devices that are connected to node 504A via an IP address. IP device tracking information extracted by identity service 536 and stored in session datastore 538 can include, but is not limited to, the IP address, MAC address, etc.

RADIUS can be a distributed client/server system that secures networks against unauthorized access. In some implementations, RADIUS clients can run on routers and send authentication requests to a central RADIUS server that contains all user authentication and network service access information. In some embodiments, RADIUS accounting information can be used if device 502 is connecting to the network from a remote network, for example from the cloud network 508 or from VPN 520. In the instance where device 502 is not really connecting to any access switch in the network and IP device tracking information is unavailable, the RADIUS accounting information can be used by identity service 536 to identify device 502.

If there is no match between device 502 and a session identifier and device tracking information (such as IP device tracking information and accounting information) (step 514), system 500 can determine that it is the first time device 502 has connected. For example, Cisco DNA Center 522 may fail to have the SSL session ID entry in session datastore 538 when Cisco DNA Center 522 receives the IPDT/RADIUS event that the host is connecting. At this point, there is no session ID within session datastore 538 because the analytics flow from ETA service 524 has not been received. Device 502 can, in response, be configured by Cisco DNA Center 522 to enable analytics by ETA service 524 and send the analytics also to a flow collector (not shown) on Cisco DNA Center 522. Session ID can then be assigned to device 502 and then stored in the controller (e.g., session ID can be stored in session datastore 538 in Cisco DNA Center 522) (step 516).

Since it is the first time the host is connecting, the host can be authorized onto the network by a policy server, such as ISE, using RADIUS AAA over EAPoL/dotlx or layer 3. The authorization request can also be forwarded to Cisco DNA Center from ISE (using a pxGrid notification mechanism of a new authorization). Moreover, the authorization information can be stored, such as into the Cisco DNA Center database for use in future re-connection of that same host. The authorization can include information such as, but not limited to, ACL, security/scalable group tags, and VLAN assignment.

In some embodiments, Cisco DNA Center 522 automation can be via NETCONF, Command Line Interface (CLI), and/or application programming interface (API). These can be used to turn on the collection of ETA service 524's analytics flow at the respective device that the device 502 traffic would flow according to the device that observes the IPDT information and relates the SNMP trap to Cisco DNA Center 522.

In some embodiments, the system can identify that a device, such as a client device, associated with a security policy has previously connected to one of the networks, and should be subject to entitlement policies consistently applied to the subsequent network connection. For example, system 500 can determine that there is a match between the device and a session ID (SSL session ID), IP device tracking information, and RADIUS accounting information (step 514). The session ID, IP device tracking information, and accounting information can identify device 502 independent of where in the multiple networks device 502 has connected. For example, the combination of this information can be used to determine that device 502 initially connected to network 506 through node 504A, later re-connected to cloud network 508 through node 504B, and then re-connected to VPN 520 through node 504C. Based on the match, a prior authorization specific to device 502 can be retrieved and applied to device 502 (e.g., by provision service 528) no matter where device 502 connects.

In some embodiments, identity service 536 can identify device 502 by IP device tracking information tracking a MAC address and IP address of a device locally connecting to the network. Remote authentication dial-in user service accounting information can track a device remotely connecting to the network. The use of both IP device tracking information and accounting information (e.g., device tracking information), then, covers device 502 reconnecting to a node on the local network 506 or a remote network (e.g., cloud network 508 or VPN 520), respectively. In some embodiments, the session ID can cover both on premise and off premise (e.g., cloud, VPN, etc.) use cases. Based on the match, a consistent security policy can be applied to device 502 whether it's connected to network 506, cloud network 508, or VPN 520.

As discussed above, detecting or determining whether device 502 has connected can be done in many ways. For example, Cisco DNA Center 522 can periodically poll all network devices for newly connected devices, receive a notification that is from an SNMP trap or other type of event, or receive a RADIUS accounting event (which can be directly sent to Cisco DNA Center 522 or could be sent to a RADIUS server, which can then notify Cisco DNA Center 522).

In some embodiments, when any client comes onboard (e.g., device 502), either in the on premise network (e.g., network 506) or from cloud network 508 or from VPN 520, identity systems like identity service 536 can perform the authentication, authorization, and accounting (AAA) authorization services and Cisco DNA Center 522 can receive the AAA authorization information for each and every client from identity service 536 as well. In some embodiments, when a new client comes onboard from VPN 520, then a copy of the RADIUS information is received. Based on this, system 500 can find out if the client is a new client or an existing client that has switched from the on premise network 506 to the internet 522 and is connected through the VPN 520 path, and then correlate with the existing information if it's an existing session based on the session ID and accounting information.

In some embodiments, if it is not the first time device 502 is connecting, when the same pxGrid notification or IPDT event that is received when device 502 reconnects on to the network 506, Cisco DNA Center 522 can check if the session ID is in session datastore 538 and retrieve any prior authorization specific to that end host, if it exists (e.g., can be found by Cisco DNA Center 522). If it cannot find a match, device 502 is treated as if it is the first time it is connecting, as described above. If a match is found, device 502 is treated as a reconnecting device.

Device 502 can have, for example, a device profile that includes the prior authorization specific to that end host (such as AAA authorization). In some embodiments, network administrators can assign differing authorization/security levels (e.g., traffic profiles) to different types of client devices: students may have one type of authorization (traffic profile 1), while guests or teachers can have another type of authorization (e.g., traffic profile 2, which may be more lax, allowing more types of website access, etc.). When a student performs network hopping, and re-connects to the network at a different point in the network, then the same device profile from where they initially came from is applied.

In some embodiments, once device 502 is authorized on the network, IP packets can communicate to/from device 502. For example, NetFlow relating to device 502 can be collected from the device 502 and can be sent to Cisco DNA Center 522. Cisco DNA Center 522 can extract the SSL session ID from the NetFlow, and maintain it in the session datastore 538 with the source IP that matches the authorization of device 502. This session ID can be used by device 502 to resume from SSL connection terminations, and thus transcends the port and network.

In some embodiments, Cisco DNA Center 522 can configure on node 504A, node 504B, or node 504C that IP device tracking (IPDT) service 534 be enabled and Simple Network Management Protocol (SNMP) traps be sent to it when device 502 moves or drops the connection at the port, or periodically re-discovers. The IPDT service 534 can detect the presence or removal of new devices when DHCP assigns or revokes their IP addresses. In some embodiments Cisco DNA Center 522 can also learn from RADIUS accounting stop regarding connection drop/move which also covers layer 3 movement (VPN 520, cloud network 508). Thus, if device 502 moves to a different port, or a different network (for example, from network 506 to VPN 520), Cisco DNA Center 522 can find a match for the SSL session ID and authorization associated with the host.

In some embodiments, if a security information and event management (SIEM) or remediation server updates the status of device 502 or the ticket on device 502 is closed, the Cisco DNA Center 522 will clear the entry of device 502 from session datastore 538, and the new entitlement is computed per the policy.

In some embodiments, to mitigate the effect of session hijacking, the entitlement may not be determined solely from matching information (session ID, IP device tracking information, and accounting information) in the session datastore 538, but can also gather a current context of device 502. For example, if device 502 tries to copy another client's session ID, IP device tracking information, RADIUS accounting information, or other information, other telemetry information can be determined to prevent session hijacking. For example, the current context can include, but is not limited to, the current IP address, MAC address, etc. Moreover, the history from the session (stored in historical datastore 540) and the current state combined can give the least privilege entitled. System 500 can assemble all the information it has about device 502, and make sure none of it is inconsistent, and in this way device 502 cannot spoof any one or partial pieces of information to masquerade as another device.

Therefore, the disclosed methods, systems, and apparatus' can enable authorization and entitlements to follow device 502 as it moves to a different network in order to provide persistent and consistent authorization entitled by device 502. In some embodiments, the stored session ID and device tracking information (e.g., IP device tracking information and/or the RADIUS accounting information) can be cleared from the session datastore 538 and/or the cache after it is determined that the client will no longer be network hopping. For example, this can be determined from the client device being inactive for a period of time, which can be set by a network administrator.

Cisco DNA Center 522 and IPDT service 534 integration can provide a seamless authorization of VLAN, scalable group, IP address management, ACL, etc. to device 502. This technique ensures the consistent authorization across different networks, including on premise vs cloud networks for the same device 502. This technique can work across on premise and cloud environments and across network switches, including VPN. It does not require the installation of special software client.

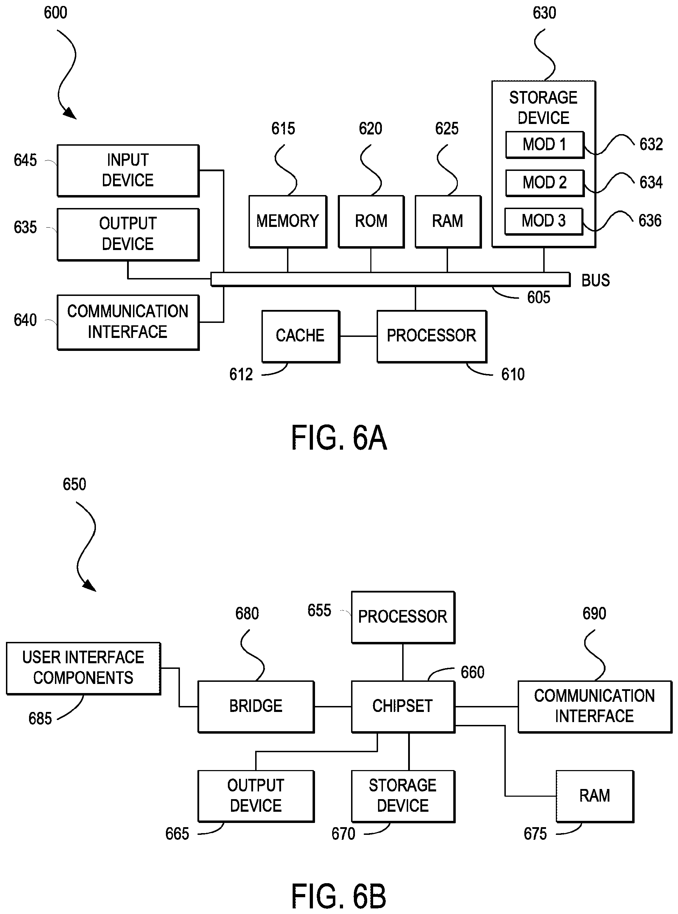

FIG. 6A and FIG. 6B illustrate systems in accordance with various embodiments illustrated in FIG. 5B. The more appropriate system will be apparent to those of ordinary skill in the art when practicing the various embodiments. Persons of ordinary skill in the art will also readily appreciate that other systems are possible.

FIG. 6A illustrates an example of a bus computing system 600 wherein the components of the system, such as system 500 in FIG. 5B, are in electrical communication with each other using a bus 605. The computing system 600 can include a processing unit (CPU or processor) 610 and a system bus 605 that may couple various system components including the system memory 615, such as read only memory (ROM) 620 and random access memory (RAM) 625, to the processor 610. The computing system 600 can include a cache 612 of high-speed memory connected directly with, in close proximity to, or integrated as part of the processor 610. The computing system 600 can copy data from the memory 615, ROM 620, RAM 625, and/or storage device 630 to the cache 612 for quick access by the processor 610. In this way, the cache 612 can provide a performance boost that avoids processor delays while waiting for data. These and other modules can control the processor 610 to perform various actions. Other system memory 615 may be available for use as well. The memory 615 can include multiple different types of memory with different performance characteristics. The processor 610 can include any general purpose processor and a hardware module or software module, such as module 1 632, module 2 634, and module 3 636 stored in the storage device 630, configured to control the processor 610 as well as a special-purpose processor where software instructions are incorporated into the actual processor design. The processor 610 may essentially be a completely self-contained computing system, containing multiple cores or processors, a bus, memory controller, cache, etc. A multi-core processor may be symmetric or asymmetric.

To enable user interaction with the computing system 600, an input device 645 can represent any number of input mechanisms, such as a microphone for speech, a touch-protected screen for gesture or graphical input, keyboard, mouse, motion input, speech and so forth. An output device 635 can also be one or more of a number of output mechanisms known to those of skill in the art. In some instances, multimodal systems can enable a user to provide multiple types of input to communicate with the computing system 600. The communications interface 640 can govern and manage the user input and system output. There may be no restriction on operating on any particular hardware arrangement and therefore the basic features here may easily be substituted for improved hardware or firmware arrangements as they are developed.

The storage device 630 can be a non-volatile memory and can be a hard disk or other types of computer readable media which can store data that are accessible by a computer, such as magnetic cassettes, flash memory cards, solid state memory devices, digital versatile disks, cartridges, random access memory, read only memory, and hybrids thereof.

As discussed above, the storage device 630 can include the software modules 632, 634, 636 for controlling the processor 610. Other hardware or software modules are contemplated. The storage device 630 can be connected to the system bus 605. In some embodiments, a hardware module that performs a particular function can include a software component stored in a computer-readable medium in connection with the necessary hardware components, such as the processor 610, bus 605, output device 635, and so forth, to carry out the function.

FIG. 6B illustrates an example architecture for a chipset computing system 650 that can be used in accordance with an embodiment. The computing system 650 can include a processor 655, representative of any number of physically and/or logically distinct resources capable of executing software, firmware, and hardware configured to perform identified computations. The processor 655 can communicate with a chipset 660 that can control input to and output from the processor 655. In this example, the chipset 660 can output information to an output device 665, such as a display, and can read and write information to storage device 670, which can include magnetic media, solid state media, and other suitable storage media. The chipset 660 can also read data from and write data to RAM 675. A bridge 680 for interfacing with a variety of user interface components 685 can be provided for interfacing with the chipset 660. The user interface components 685 can include a keyboard, a microphone, touch detection and processing circuitry, a pointing device, such as a mouse, and so on. Inputs to the computing system 650 can come from any of a variety of sources, machine generated and/or human generated.

The chipset 660 can also interface with one or more communication interfaces 690 that can have different physical interfaces. The communication interfaces 690 can include interfaces for wired and wireless LANs, for broadband wireless networks, as well as personal area networks. Some applications of the methods for generating, displaying, and using the technology disclosed herein can include receiving ordered datasets over the physical interface or be generated by the machine itself by the processor 655 analyzing data stored in the storage device 670 or the RAM 675. Further, the computing system 650 can receive inputs from a user via the user interface components 685 and execute appropriate functions, such as browsing functions by interpreting these inputs using the processor 655.

It will be appreciated that computing systems 600 and 650 can have more than one processor 610 and 655, respectively, or be part of a group or cluster of computing devices networked together to provide greater processing capability.

For clarity of explanation, in some instances the various embodiments may be presented as including individual functional blocks including functional blocks comprising devices, device components, steps or routines in a method embodied in software, or combinations of hardware and software.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Some examples of such form factors include general purpose computing devices such as servers, rack mount devices, desktop computers, laptop computers, and so on, or general purpose mobile computing devices, such as tablet computers, smart phones, personal digital assistants, wearable devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A method for tracking a device (502) at a network independent of where the device (502) connects to the network, the method comprising:
receiving, periodically during a network synchronization at a centralized controller (522) from a plurality of switches (504) in a network, device tracking information, the device tracking information comprising an existing session ID, IP device tracking information tracking a Media Access Control, MAC, address and Internet Protocol, IP, address of a device (502) when locally connecting to the network, and Remote Authentication Dial-In User Service, RADIUS, accounting information tracking the device when remotely connecting to the network;
storing, by the centralized controller (522), the existing session ID, the IP device tracking information and the RADIUS accounting information in a session datastore (538) in the controller to maintain the existing session ID and the device tracking information consistently across the network independently of where in the network the device (502) has connected;
identifying that a device (502) associated with a security policy has connected to the network;
determining whether the device (502) was previously connected to the network by determining whether there is a match between the device to the existing session ID and the device tracking information; and
based on the match, applying the security policy to the device (502).

2. The method of claim 1, further comprising:
determining that there is not a match between the device to the existing session ID and the device tracking information;
based on the determination that there is not a match, assigning a current session ID;
receiving a notification of a new authorization associated with the device; and
storing the current session ID.

3. The method of claim 1 or 2, wherein, based on the match, a prior authorization specific to the device is retrieved.

4. The method of any of claims 1 to 3, wherein identifying that the device has connected to the network comprises:
periodically polling all devices for a newly connected device.

5. The method of any of claims 1 to 4, wherein identifying that the device has connected to the network comprises:
receiving a notification from a Simple Message Management Protocol, SNMP, trap that the device has connected.

6. The method of any of claims 1 to 5, further comprising:
determining, based on the device being inactive for a period of time, that the device is no longer network hopping; and
based on the determination, clearing the existing session ID.

7. A system comprising:
one or more physical processors; and
a computer-readable medium comprising instructions stored therein, which when executed by the one or more processors, cause the one or more processors to:
receive, periodically during a network synchronization at a centralized controller (522) from a plurality of switches (504) in a network, device tracking information, the device tracking information comprising an existing session ID, IP device tracking information tracking a Media Access Control, MAC, address and Internet Protocol, IP, address of a device (502) when locally connecting to the network, and Remote Authentication Dial-In User Service, RADIUS, accounting information tracking the device when remotely connecting to the network;
store the existing session ID, the IP device tracking information and the RADIUS accounting information in a session datastore (538) in the centralized controller to maintain the existing session ID and the device tracking information consistently across the network independently of where in the network the device (502) has connected;
identify that a device (502) associated with a security policy has connected to the network;
determine whether the device (502) was previously connected to the network by determining whether there is a match between the device to the existing session ID and the device tracking information; and
based on the match, apply the security policy to the device (502).

8. The system according to claim 7, wherein the instructions when executed by the one or more processors, further cause the one or more processors to perform the method according to any one of claims 2 to 6.

9. A non-transitory computer-readable medium comprising instructions stored thereon, the instructions executable by one or more processors of a computing system to cause the computing system to track a device at a network independent of where the device connects to the network, the computing system to:
receive, periodically during a network synchronization at a centralized controller (522) from a plurality of switches (504) in a network, device tracking information, the device tracking information comprising an existing session ID, IP device tracking information tracking a Media Access Control, MAC, address and Internet Protocol, IP, address of a device (502) when locally connecting to the network, and Remote Authentication Dial-In User Service, RADIUS, accounting information tracking the device when remotely connecting to the network;
store the existing session ID, the IP device tracking information and the RADIUS accounting information in a session datastore (538) in the centralized controller to maintain the existing session ID and the device tracking information consistently across the network independently of where in the network the device (502) has connected;
identify that a device (502) associated with a security policy has connected to the network;
determine whether the device (502) was previously connected to the network by determining whether there is a match between the device to the existing session ID and the device tracking information; and
based on the match, applying the security policy to the device (502).

10. The non-transitory computer readable medium according to claim 9, wherein the instructions, when executed by the computer, further cause the computer to carry out the steps of the method of any of claims 2 to 6.

## Patentansprüche

1. Verfahren zum Verfolgen einer Vorrichtung (502) in einem Netzwerk, unabhängig davon, wo die Vorrichtung (502) mit dem Netzwerk verbunden ist, wobei das Verfahren Folgendes umfasst:
periodisches Empfangen, während einer Netzwerksynchronisation an einem zentralen Controller (522) von einer Vielzahl von Switches (504) in einem Netzwerk, von Vorrichtungsverfolgungsinformationen, wobei die Vorrichtungsverfolgungsinformationen Folgendes umfassen: eine vorhandene Sitzungs-ID, IP-Vorrichtungsverfolgungsinformationen, die eine Medienzugriffskontroll- (Media Access Control, MAC) Adresse und eine Internetprotokoll- (IP) Adresse einer Vorrichtung (502) verfolgen, wenn sie lokal mit dem Netzwerk verbunden ist, und Abrechnungsinformationen des Fernauthentisierungs-Einwahlbenutzerdienstes (Remote Authentication Dial-In User Service, RADIUS), die die Vorrichtung verfolgen, wenn sie remote mit dem Netzwerk verbunden ist;
Speichern, durch den zentralisierten Controller (522), der bestehenden Sitzungs-ID, der IP-Vorrichtungsverfolgungsinformationen und der RADIUS-Abrechnungsinformationen in einem Sitzungsdatenspeicher (538) in dem Controller, um die bestehende Sitzungs-ID und die Vorrichtungsverfolgungsinformationen im gesamten Netzwerk konsistent zu halten, unabhängig davon, wo im Netzwerk die Vorrichtung (502) verbunden ist;
Identifizieren, dass eine Vorrichtung (502), die einer Sicherheitsrichtlinie zugeordnet ist, mit dem Netzwerk verbunden ist;
Bestimmen, ob die Vorrichtung (502) zuvor mit dem Netzwerk verbunden war, indem bestimmt wird, ob eine Übereinstimmung zwischen der Vorrichtung und der vorhandenen Sitzungs-ID und den Vorrichtungsverfolgungsinformationen vorliegt; und
basierend auf der Übereinstimmung, Anwenden der Sicherheitsrichtlinie auf die Vorrichtung (502).

2. Verfahren nach Anspruch 1, das ferner Folgendes umfasst:
Bestimmen, dass keine Übereinstimmung zwischen der Vorrichtung und der vorhandenen Sitzungs-ID und den Vorrichtungsverfolgungsinformationen vorliegt;
basierend auf der Bestimmung, dass keine Übereinstimmung vorliegt, Zuweisen einer aktuellen Sitzungs-ID;
Empfangen einer Benachrichtigung über eine neue Autorisierung, die der Vorrichtung zugeordnet ist; und
Speichern der aktuellen Sitzungs-ID.

3. Verfahren nach Anspruch 1 oder 2, wobei basierend auf der Übereinstimmung eine für die Vorrichtung spezifische vorherige Autorisierung abgerufen wird.

4. Verfahren nach einem der Ansprüche 1 bis 3, wobei das Identifizieren, dass die Vorrichtung mit dem Netzwerk verbunden ist, Folgendes umfasst:
periodisches Abfragen aller Vorrichtungen nach einer neu verbundenen Vorrichtung.

5. Verfahren nach einem der Ansprüche 1 bis 4, wobei das Identifizieren, dass die Vorrichtung mit dem Netzwerk verbunden ist, Folgendes umfasst:
Empfangen einer Benachrichtigung von einer Trap für ein Verwaltungsprotokoll für einfache Nachrichten (Simple Message Management Protocol, SNMP), dass die Vorrichtung verbunden ist.

6. Verfahren nach einem der Ansprüche 1 bis 5, das ferner Folgendes umfasst:
Bestimmen, basierend darauf, dass die Vorrichtung für einen Zeitraum inaktiv ist, dass die Vorrichtung nicht mehr Netzwerk-Hopping durchführt; und
basierend auf der Bestimmung, Löschen der bestehenden Sitzungs-ID.

7. System, das Folgendes umfasst:
einen oder mehrere physische Prozessoren; und
ein computerlesbares Medium, das darin gespeicherte Anweisungen umfasst, die, wenn sie von dem einen oder den mehreren Prozessoren ausgeführt werden, bewirken, dass der eine oder die mehreren Prozessoren Folgendes ausführen:
periodisches Empfangen, während einer Netzwerksynchronisation an einem zentralen Controller (522) von einer Vielzahl von Switches (504) in einem Netzwerk, von Vorrichtungsverfolgungsinformationen, wobei die Vorrichtungsverfolgungsinformationen Folgendes umfassen: eine vorhandene Sitzungs-ID, IP-Vorrichtungsverfolgungsinformationen, die eine Medienzugriffskontroll- (MAC) Adresse und eine Internetprotokoll- (IP) Adresse einer Vorrichtung (502) verfolgen, wenn sie lokal mit dem Netzwerk verbunden ist, und Abrechnungsinformationen des Fernauthentisierungs-Einwahlbenutzerdienstes (RADIUS), die die Vorrichtung verfolgen, wenn sie remote mit dem Netzwerk verbunden ist;
Speichern der bestehenden Sitzungs-ID, der IP-Vorrichtungsverfolgungsinformationen und der RADIUS-Abrechnungsinformationen in einem Sitzungsdatenspeicher (538) in dem zentralisierten Controller, um die bestehende Sitzungs-ID und die Vorrichtungsverfolgungsinformationen im gesamten Netzwerk konsistent zu halten, unabhängig davon, wo im Netzwerk die Vorrichtung (502) verbunden ist;
Identifizieren, dass eine Vorrichtung (502), die einer Sicherheitsrichtlinie zugeordnet ist, mit dem Netzwerk verbunden ist;
Bestimmen, ob die Vorrichtung (502) zuvor mit dem Netzwerk verbunden war, indem bestimmt wird, ob eine Übereinstimmung zwischen der Vorrichtung und der vorhandenen Sitzungs-ID und den Vorrichtungsverfolgungsinformationen vorliegt; und
basierend auf der Übereinstimmung, Anwenden der Sicherheitsrichtlinie auf die Vorrichtung (502).

8. System nach Anspruch 7, wobei die Befehle, wenn sie von dem einen oder den mehreren Prozessoren ausgeführt werden, ferner bewirken, dass der eine oder die mehreren Prozessoren das Verfahren nach einem der Ansprüche 2 bis 6 durchführen.

9. Nicht-flüchtiges, computerlesbares Medium, das darauf gespeicherte Befehle umfasst, wobei die Befehle von einem oder mehreren Prozessoren eines Computersystems ausführbar sind, um das Computersystem zu veranlassen, eine Vorrichtung in einem Netzwerk unabhängig davon zu verfolgen, wo die Vorrichtung mit dem Netzwerk verbunden ist, wobei das Computersystem Folgendes durchführt:
periodisches Empfangen, während einer Netzwerksynchronisation an einem zentralen Controller (522) von einer Vielzahl von Switches (504) in einem Netzwerk, von Vorrichtungsverfolgungsinformationen, wobei die Vorrichtungsverfolgungsinformationen Folgendes umfassen: eine vorhandene Sitzungs-ID, IP-Vorrichtungsverfolgungsinformationen, die eine Medienzugriffskontroll- (MAC) Adresse und eine Internetprotokoll- (IP) Adresse einer Vorrichtung (502) verfolgen, wenn sie lokal mit dem Netzwerk verbunden ist, und Abrechnungsinformationen des Fernauthentisierungs-Einwahlbenutzerdienstes (RADIUS), die die Vorrichtung verfolgen, wenn sie remote mit dem Netzwerk verbunden ist;
Speichern der bestehenden Sitzungs-ID, der IP-Vorrichtungsverfolgungsinformationen und der RADIUS-Abrechnungsinformationen in einem Sitzungsdatenspeicher (538) in dem zentralisierten Controller, um die bestehende Sitzungs-ID und die Vorrichtungsverfolgungsinformationen im gesamten Netzwerk konsistent zu halten, unabhängig davon, wo im Netzwerk die Vorrichtung (502) verbunden ist;
Identifizieren, dass eine Vorrichtung (502), die einer Sicherheitsrichtlinie zugeordnet ist, mit dem Netzwerk verbunden ist;
Bestimmen, ob die Vorrichtung (502) zuvor mit dem Netzwerk verbunden war, indem bestimmt wird, ob eine Übereinstimmung zwischen der Vorrichtung und der vorhandenen Sitzungs-ID und den Vorrichtungsverfolgungsinformationen vorliegt; und
basierend auf der Übereinstimmung, Anwenden der Sicherheitsrichtlinie auf die Vorrichtung (502).

10. Nicht-flüchtiges computerlesbares Medium nach Anspruch 9, wobei die Anweisungen, wenn sie vom Computer ausgeführt werden, den Computer ferner veranlassen, die Schritte des Verfahrens nach einem der Ansprüche 2 bis 6 auszuführen.

## Revendications

1. Procédé permettant de suivre un dispositif (502) sur un réseau indépendamment de l'endroit où le dispositif (502) se connecte au réseau, le procédé comprenant :
la réception, périodiquement au cours d'une synchronisation de réseau au niveau d'un contrôleur centralisé (522) à partir d'une pluralité de commutateurs (504) dans un réseau, des informations de suivi de dispositif, les informations de suivi de dispositif comprenant un ID de session existant, des informations de suivi de dispositif IP suivant une adresse de commande d'accès au support, MAC, et une adresse de protocole Internet, IP, d'un dispositif (502) lors d'une connexion locale au réseau, et des informations de comptabilité de service d'usager commuté à authentification distante, RADIUS, suivant le dispositif lors d'une connexion à distance au réseau ;
le stockage, par le contrôleur centralisé (522), de l'ID de session existant, des informations de suivi de dispositif IP et des informations de comptabilité RADIUS dans un magasin de données de session (538) dans le contrôleur pour maintenir l'ID de session existant et les informations de suivi de dispositif de manière cohérente sur l'ensemble du réseau, indépendamment de l'endroit du réseau où le dispositif (502) s'est connecté ;
le fait d'identifier qu'un dispositif (502) associé à une politique de sécurité s'est connecté au réseau ;
le fait de déterminer si le dispositif (502) a été précédemment connecté au réseau en déterminant s'il existe une correspondance entre le dispositif et l'ID de session existant et les informations de suivi de dispositif ; et
sur la base de la correspondance, l'application de la politique de sécurité au dispositif (502).

2. Procédé selon la revendication 1, comprenant en outre :
la détermination qu'il n'y a pas de correspondance entre le dispositif, l'ID de session existant et les informations de suivi de dispositif ;
sur la base de la détermination qu'il n'y a pas de correspondance, l'attribution d'un ID de session actuel ;
la réception d'une notification d'une nouvelle autorisation associée au dispositif ; et
le stockage de l'ID de session actuel.

3. Procédé selon la revendication 1 ou 2, dans lequel, sur la base de la correspondance, une autorisation précédente spécifique au dispositif est récupérée.

4. Procédé selon l'une quelconque des revendications 1 à 3, dans lequel l'identification du fait que le dispositif s'est connecté au réseau comprend :
le fait d'interroger périodiquement tous les dispositifs pour déterminer si un dispositif vient de se connecter.

5. Procédé selon l'une quelconque des revendications 1 à 4, dans lequel l'identification du fait que le dispositif s'est connecté au réseau comprend :
la réception d'une notification à partir d'un piège de protocole simple de gestion des messages, SNMP, indiquant que le dispositif s'est connecté.

6. Procédé selon l'une quelconque des revendications 1 à 5, comprenant en outre :
la détermination, sur la base de l'inactivité du dispositif pendant un certain temps, que le dispositif n'effectue plus de saut de réseau ; et
sur la base de la détermination, la suppression de l'ID de session existant.

7. Système comprenant :
un ou plusieurs processeurs physiques ; et
un support lisible par ordinateur comprenant des instructions stockées sur celui-ci, qui, lorsqu'elles sont exécutées par le ou les processeurs, amènent le ou les processeurs à :
recevoir, périodiquement au cours d'une synchronisation de réseau au niveau d'un contrôleur centralisé (522) à partir d'une pluralité de commutateurs (504) dans un réseau, des informations de suivi de dispositif, les informations de suivi de dispositif comprenant un ID de session existant, des informations de suivi de dispositif IP suivant une adresse de commande d'accès au support, MAC, et une adresse de protocole Internet, IP, d'un dispositif (502) lors d'une connexion locale au réseau, et des informations de comptabilité de service d'usager commuté à authentification distante, RADIUS, suivant le dispositif lors d'une connexion à distance au réseau ;
stocker l'ID de session existant, les informations de suivi de dispositif IP et les informations de comptabilité RADIUS dans un magasin de données de session (538) dans le contrôleur centralisé pour maintenir l'ID de session existant et les informations de suivi de dispositif de manière cohérente sur l'ensemble du réseau, indépendamment de l'endroit du réseau où le dispositif (502) s'est connecté ;
identifier qu'un dispositif (502) associé à une politique de sécurité s'est connecté au réseau ;
déterminer si le dispositif (502) a été précédemment connecté au réseau en déterminant s'il existe une correspondance entre le dispositif et l'ID de session existant et les informations de suivi de dispositif ; et
sur la base de la correspondance, appliquer la politique de sécurité au dispositif (502).

8. Système selon la revendication 7, dans lequel les instructions, lorsqu'elles sont exécutées par le ou les processeurs, amènent en outre le ou les processeurs à effectuer le procédé selon l'une quelconque des revendications 2 à 6.

9. Support non transitoire lisible par ordinateur comprenant des instructions stockées sur celui-ci, les instructions étant exécutables par le ou les processeurs d'un système informatique pour amener le système informatique à suivre un dispositif sur un réseau indépendamment de l'endroit où le dispositif se connecte au réseau, le système informatique pouvant :
recevoir, périodiquement au cours d'une synchronisation de réseau au niveau d'un contrôleur centralisé (522) à partir d'une pluralité de commutateurs (504) dans un réseau, des informations de suivi de dispositif, les informations de suivi de dispositif comprenant un ID de session existant, des informations de suivi de dispositif IP suivant une adresse de commande d'accès au support, MAC, et une adresse de protocole Internet, IP, d'un dispositif (502) lors d'une connexion locale au réseau, et des informations de comptabilité de service d'usager commuté à authentification distante, RADIUS, suivant le dispositif lors d'une connexion à distance au réseau ;
stocker l'ID de session existant, les informations de suivi de dispositif IP et les informations de comptabilité RADIUS dans un magasin de données de session (538) dans le contrôleur centralisé pour maintenir l'ID de session existant et les informations de suivi de dispositif de manière cohérente sur l'ensemble du réseau, indépendamment de l'endroit du réseau où le dispositif (502) s'est connecté ;
identifier qu'un dispositif (502) associé à une politique de sécurité s'est connecté au réseau ;
déterminer si le dispositif (502) a été précédemment connecté au réseau en déterminant s'il existe une correspondance entre le dispositif et l'ID de session existant et les informations de suivi de dispositif ; et
sur la base de la correspondance, l'application de la politique de sécurité au dispositif (502).

10. Support non transitoire lisible par ordinateur selon la revendication 9, dans lequel les instructions, lorsqu'elles sont exécutées par l'ordinateur, amènent en outre l'ordinateur à exécuter les étapes du procédé selon l'une quelconque des revendications 2 à 6.
